(19) Europäisches Patentamt
European Patent Office
Office européen des brevets

(11) **EP 4 015 935 B1**

(12) **EUROPÄISCHE PATENTSCHRIFT**

(45) Veröffentlichungstag und Bekanntmachung des Hinweises auf die Patenterteilung:
**12.02.2025   Patentblatt 2025/07**

(21) Anmeldenummer: **21215131.0**

(22) Anmeldetag: **16.12.2021**

(51) Internationale Patentklassifikation (IPC):
***F24S 10/70*** *(2018.01)*

(52) Gemeinsame Patentklassifikation (CPC):
**F24S 10/45; F24S 10/25; F24S 10/742; F24S 10/748; F24S 23/74; F24S 80/30;** F24S 2023/834; Y02E 10/44

(54) **SONNENKOLLEKTOR**

SOLAR COLLECTOR

COLLECTEUR SOLAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **16.12.2020   DE 102020007701**

(43) Veröffentlichungstag der Anmeldung:
**22.06.2022   Patentblatt 2022/25**

(73) Patentinhaber: **Ritter Energie- und Umwelttechnik GmbH & Co. KG
72135 Dettenhausen (DE)**

(72) Erfinder:
• **Abrecht, Stefan
75210 Keltern (DE)**
• **Weidemann, Thomas
87634 Obergünzburg (DE)**

(74) Vertreter: **Huwer, Andreas
Huwer & Partner
Patent- und Rechtsanwälte PartG mbB
Guntherstraße 3
76185 Karlsruhe (DE)**

(56) Entgegenhaltungen:
WO-A2-2014/019100          DE-A1- 102012 014 825
DE-A1- 102013 008 717      DE-A1- 2 548 619
DE-U1- 202009 006 077      DE-U1- 202010 015 366
FR-A1- 2 484 062           FR-A1- 2 516 217
US-A- 4 224 924

**Beschreibung**

Die Erfindung betrifft einen Sonnenkollektor nach dem Oberbegriff von Patentanspruch 1.

Ein derartiger, als Flachkollektor ausgestalteter Sonnenkollektor ist aus der DE 10 2013 008 717 A1 bekannt. Er weiist einen Kollektoreinlass und einen Kollektorauslass für ein Wärmeträgerfluid sowie ein mit dem Wärmeträgerfluid durchströmbares Rohrregister auf, das einen Verteiler, einen Sammler und mindestens drei zwischen dem Verteiler und dem Sammler angeordnete, hydraulisch parallel zueinander geschaltete Strömungspfade für das Wärmeträgerfluid aufweist. Die Strömungspfade sind kreuzungsfrei verlegt und umfassen jeweils eine Rücklaufleitung, eine Vorlaufleitung und mindestens eine zwischen diesen angeordnete Absorberleitung zur Übertragung von thermischer Solarenergie auf das Wärmeträgerfluid. Zwischen ihrer Rücklauf- und ihrer Vorlaufleitung haben die einzelnen Strömungspfade etwa einen U-förmigen Verlauf. Alle Strömungspfade des Rohrregisters sind in einer gemeinsamen Ebene angeordnet. Die Absorberleitungen sind in der Aufsicht auf die zur Sonnenbestrahlung vorgesehene Vorderseite des Sonnenkollektors quer zu ihrer Längserstreckung zueinander versetzt nebeneinander angeordnet. Der Verteiler hat eine Einlassöffnung und mehrere damit hydraulisch verbundene Austrittsöffnungen. Jede Austrittsöffnung ist mit einer Rücklaufleitung eines Strömungspfads verbunden ist. Der Sammler hat mehrere Eintrittsöffnungen und eine damit hydraulisch verbundene Auslassöffnung. Jede Eintrittsöffnung mit einer Vorlaufleitung eines Strömungspfads verbunden. Die Rücklaufleitungen bzw. die Vorlaufleitungen verlaufen derart quer zu ihren Längsachsen zueinander versetzt nebeneinander, dass sie ein Rohrleitungsbündel bilden, das sich mit seiner Längsachse in eine Richtung erstreckt, in der die Absorberleitungen zueinander versetzt sind. Die Austrittsöffnungen des Verteilers sind in Erstreckungsrichtung des Rohrleitungsbündels an einer einzigen ersten Stelle und die Eintrittsöffnungen des Sammlers in Erstreckungsrichtung des Rohrleitungsbündels an einer einzigen zweiten Stelle angeordnet. Bei dem vorbekannten Sonnenkollektor sind die Vorlauf- und die Rücklaufleitungen der einzelnen Strömungspfade jeweils gleich lang und alle Strömungskanäle haben etwa die gleiche Länge. Durch alle Strömungspfade strömt etwa das gleiche Volumen pro Zeit.

Ferner ist ein Sonnenkollektor, der als Röhrenkollektor ausgestaltet ist, aus EP 1 354 170 B1 bekannt. Er hat ein von einem Wärmeträgerfluid durchströmbares Rohrregister, das mehrere gerade Absorberleitungen aufweist, die in einer Ebene parallel nebeneinander angeordnet und durch Zwischenräume voneinander beabstandet sind. Jede Absorberleitung ist jeweils von einem im Wesentlichen zylindrischen Hüllrohr aus Glas umgeben, das konzentrisch zu der Absorberleitung angeordnet und in radialer Richtung durch einen evakuierten oder mit einem Edelgas befüllten Zwischenraum von der Absorberleitung beabstandet ist. An seinem einen Axialende ist jedes Hüllrohr jeweils dicht mit der Absorberleitung verbunden und an seinem anderen Ende ist das Hüllrohr jeweils geschlossen. Durch die Hüllrohre wird eine wirksame thermische Isolierung des Registers gegenüber der Umgebung des Sonnenkollektors ermöglicht.

Die einzelnen Absorberleitungen sind jeweils als Koaxialrohr mit einem inneren und einem äußeren Rohr ausgestaltet. Die Zuführung des Wärmeträgerfluids zu den Absorberleitungen erfolgt über einen als einzelne Rohrleitung ausgestalteten Verteiler, der eine Einlassöffnung für das Wärmeträgerfluid eine der Anzahl der Absorberleitungen entsprechende Anzahl von Austrittsöffnungen aufweist, die in Längserstreckungsrichtung des Verteilers in konstanten Abständen zueinander angeordnet sind. An jeder Austrittsöffnung des Verteilers zweigt eine Rücklaufleitung von dem Verteiler ab, die mit ihrer Längserstreckung in der von den Kollektorrohren aufgespannten Ebene etwa rechtwinklig zur Längserstreckung des Verteilers verläuft. Jede Rücklaufleitung verbindet den Verteiler jeweils mit einem Axialende eines der betreffenden Rücklaufleitung zugeordneten Hüllrohrs. An dem Axialende gelangt das Wärmeträgerfluid in das innere Rohr der in dem Hüllrohr befindlichen Absorberleitung. Durch das innere Rohr hindurch fließt das Wärmeträgerfluid zu dem von dem Verteiler entfernten Ende des inneren Rohrs der Absorberleitung und gelangt dort in einen zwischen dem inneren und dem äußeren Rohr der Absorberleitung befindlichen Zwischenraum. Durch diesen hindurch fließt das Wärmeträgerfluid zu dem Verteiler zugewandten Ende der Absorberleitung zurück, wo es aus dem Hüllrohr austritt und über eine außerhalb des Hüllrohrs befindliche kurze Vorlaufleitung hindurch zu einer Eintrittsöffnung eines Sammlers gelangt, in welche die Vorlaufleitung einmündet. Der Sammler ist als einzelne Rohrleitung ausgestaltet, die parallel zu der Rohrleitung des Verteilers verläuft und eine der Anzahl der Absorberleitungen entsprechende Anzahl von Eintrittsöffnungen hat, die in Längserstreckungsrichtung des Sammlers in konstanten Abständen zueinander angeordnet sind. Der Sammler weist ferner einen einzigen Kollektorauslass auf, der mit allen Einlassöffnungen des Sammlers verbunden ist.

Der vorbekannte Sonnenkollektor hat den Nachteil, dass in den einzelnen Strömungspfaden unterschiedliche Strömungsgeschwindigkeiten des Wärmeträgerfluids auftreten. Eine ungleiche Strömungsverteilung führt zu geringeren Kollektorwirkungsgraden und kann bei Betriebstemperaturen nahe der Siedetemperatur des Wärmeträgerfluids zu einem partiellem Sieden des Wärmeträgerfluids und somit zu einem Ausfall der den Sonnenkollektor aufweisenden Solaranlage durch blockierende Dampfpolster führen. Bei Stagnation in den Sammler- und/oder Verteilerrohren formt sich kein zusammenhängendes Dampfvolumen aus, wodurch Dampfschläge erzeugt werden, welche die Lebensdauer der Solaranlage herabsetzen und Anlagenkomponenten zerstören können. Ungünstig ist außerdem, dass fertigungstechnisch jede Abzweigung und Einmündung in das Sammlerohr gebohrt und individuell an den verschiedenen Stellen z.B. gereinigt und eingelötet werden muss.

Es besteht deshalb die Aufgabe, einen Sonnenkollektor der eingangs genannten Art zu schaffen der einen hohen Wirkungsgrad ermöglicht und bei dem beim Auftreten einer Stagnation Dampfschläge des Wärmeträgerfluids weitestgehend vermieden werden. Außerdem soll der Sonnenkollektor schnell und kostengünstig herstellbar sein und kompakte Abmessungen aufweisen.

Diese Aufgabe wird bei einem Sonnenkollektor der eingangs genannten Art mit den Merkmalen des Patentanspruchs 1 gelöst.

Der Erfindung liegt die Erkenntnis zu Grunde, dass Sonnenkollektoren, deren Rohrregister Sammel- und Verteilerrohre aufweisen, bei denen die Abzweigungen bzw. Einmündungen in Erstreckungsrichtung des Sammel- bzw. Verteilerrohre voneinander beabstandet in einer Reihe sind, bereits aufgrund der unterschiedlichen Strömungsgeschwindigkeiten an den Abzweigungs- bzw. Einmündungsstellen unterschiedliche singuläre Druckverluste haben, die in einer ungleichen Strömungsverteilung resultieren. Dieser Nachteil wird umso größer je mehr Rücklaufleitungen parallel von dem Verteilerrohr abzweigen bzw. je mehr Vorlaufleitungen parallel in das Sammelrohr einmünden und je geringer der Druckverlust in den Absorberrohren ist.

Die Erfindung verzichtet auf derartige Sammel- und Verteilerrohre, indem sie den Volumenstrom jeweils in Erstreckungsrichtung des Rohrleitungsbündels an einer einzigen ersten Stelle auf alle Strömungspfade verteilt und in Erstreckungsrichtung des Rohrleitungsbündels an einer einzigen zweiten Stelle wieder zusammenführt.

Da die Austrittsöffnungen des Verteilers in Erstreckungsrichtung des Rohrleitungsbündels an derselben ersten Stelle und die Einlassöffnungen des Sammlers in Erstreckungsrichtung des Rohrleitungsbündels an derselben zweiten Stelle angeordnet sind, können sämtliche Vor- und Vorlaufleitungen auf einfache Weise in einem einzigen Produktionsschritt mit dem Verteiler bzw. dem Sammler verbunden werden, beispielsweise durch Löten. Dabei brauchen der Verteiler und der Sammler jeweils nur an einer Stelle erhitzt zu werden, beispielsweise durch Induzieren von Wirbelströmen an der entsprechenden Stelle des metallischen Werkstoffs des Verteilers bzw. des Sammlers.

Vorteilhaft ist weiterhin, dass theoretisch beliebig viele parallele Rohrleitungen zu einem hydraulisch idealen Register verbunden werden können. Ein weiterer Vorteil besteht darin, dass Kollektoren gleicher Größe durch die Wahl einer unterschiedlichen Anzahl paralleler Rohre und entsprechend angepasster Mäander mit unterschiedlichen Druckverlusten hergestellt werden können. Solche Kollektoren lassen sich seriell dann zu unterschiedlich großen Kollektorsträngen aber dennoch gleichen Druckverlust verschalten, ohne dass eine Einregelung bzw. Drosselung des Volumenstroms erforderlich ist. Ein weiterer Vorteil ist, dass sich im Stagnationsfall ein zusammenhängendes Dampfvolumen ausbildet, und dass somit Dampfschläge weitestgehend vermieden werden.

Der Sonnenkollektor weist mindestens drei und bevorzugt mindestens vier zwischen dem Verteiler und dem Sammler angeordnete Strömungspfade für das Wärmeträgerfluid auf.

Mindestens eine Rücklauf- und/oder mindestens eine Vorlaufleitung des Rohrleitungsbündels weist wenigstens zwei in Reihe geschaltete, sich im Wesentlichen in Längsrichtung des Rohrleitungsbündels ersteckende Rohrleitungsabschnitte auf, wobei die Längsmittelachsen der Rohrleitungsabschnitte quer Längsrichtung des Rohrleitungsbündels zueinander versetzt sind. Dies ermöglicht kompakte Abmessungen des Rohrleitungsbündels.

Mindestens drei in Längsrichtung des Rohrleitungsbündels verlaufende Rohrleitungsabschnitte der Rücklauf- und/oder Vorlaufleitungen des Rohrleitungsbündels schneiden die Zylindermantelfläche eines gedachten, zur Längsmittelachse des Rohrleitungsbündels konzentrischen Zylinders. Diese Rohrleitungsabschnitte sind in Umfangsrichtung der Zylindermantelfläche zueinander versetzt nebeneinander angeordnet und derart radial von der Zylinderachse der Zylindermantelfläche beabstandet, dass zwischen den in Umfangsrichtung der Zylindermantelfläche zueinander versetzten Rohrleitungsabschnitten ein sich entlang der Zylinderachse erstreckender Zwischenraum gebildet ist, dessen Querschnittsabmessungen zur Aufnahme eines Rohrleitungsabschnitts geeignet ist, dessen Querschnittsabmessungen den Querschnittsabmessungen eines der in Umfangsrichtung der Zylindermantelfläche zueinander versetzten Rohrleitungsabschnitte entspricht. Die Rohrleitungsabschnitte oder deren gerade Verlängerungen sind dann ähnlich angeordnet, wie die Patronenkammern eines Revolvers, wobei im Zentrum der in Umfangsrichtung zueinander versetzten Rohrleitungsabschnitte Platz für die Aufnahme eines weiteren Rohrleitungsabschnitts vorhanden ist. Dies ermöglicht einen besonders kompakten Aufbau des Rohrleitungsbündels. Dennoch können bei der Herstellung des Rohrregisters die einzelnen Strömungspfade bzw. Stränge des Rohrregisters auf einfache Weise montiert und über den Verteiler und den Sammler miteinander verbunden werden. Die in Umfangsrichtung der Zylindermantelfläche zueinander versetzten Rohrleitungsabschnitte sind vorzugsweise in konstanten Winkelabständen zueinander versetzt. Wenn beispielsweise 8 Rohrleitungsabschnitte oder deren gerade Verlängerungen in Umfangsrichtung zueinander versetzt sind, beträgt der Winkelabstand $360°/8 = 45°$.

Bei einer zweckmäßigen Ausführungsform der Erfindung bilden die Rücklaufleitungen ein erstes Rohrleitungsbündel und die Vorlaufleitungen ein zweites Rohrleitungsbündel, wobei sich das erste und zweite Rohrleitungsbündel mit ihren Längsachsen in eine Richtung erstrecken und die Rohrleitungsbündel quer zu ihrer Erstreckungsrichtung parallel zueinander versetzt sind. Dabei sind die Absorberrohre bevorzugt in dem zwischen den Rohrleitungsbündeln und/oder deren geraden Verlängerungen befindlichen Raum angeordnet.

Bei einer vorteilhaften Ausgestaltung der Erfindung ist der Längenunterschied zwischen dem längsten und dem kürzesten Strömungspfad kleiner als 10% der Länge des längsten Strömungspfads, insbesondere kleiner als 5%, gegebenenfalls kleiner als 3% und bevorzugt kleiner als 3% der Länge des längsten Strömungspfads. Aufgrund der im Wesentlichen gleichen Länge der einzelnen Strömungspfade (und dem gleichen Strömungsquerschnitt der einzelnen Strömungspfade des Sonnenkollektors) ist der Druckverlust an den Strömungspfaden und der Volumenstrom in den Strömungspfaden bzw. den Strängen des Sonnenkollektors ebenfalls gleich. Hierdurch wird eine noch gleichmäßigere Strömungsverteilung im Rohrregister ermöglicht. Dieser Vorteil bleibt auch bei einem variablen Gesamtvolumenstrom des Wärmeträgermediums erhalten.

Bei einer bevorzugten Ausführungsform der Erfindung weichen die Rücklaufleitungen und die Vorlaufleitungen der Strömungspfade jeweils an ihrem der Absorberleitung des betreffenden Strömungspfads zugewandten Endbereich derart von einer geraden Linie ab, dass das Wärmeträgerfluid beim Durchströmen des Strömungspfads eine Änderung seiner Strömungsrichtung um 90° erfährt. Die Absorberleitungen können dann mit ihrer Längserstreckung jeweils orthogonal zur Längsachse des Rohrleitungsbündels und parallel zueinander angeordnet sein.

Zweckmäßigerweise weisen die Absorberleitungen mindestens einen U-förmig ausgestalteten Absorberleitungsabschnitt auf und/oder die Absorberleitungen sind als Mäander ausgestaltet. Dabei können die einzelnen Mäander jeweils mindestens einen U-förmig ausgestalteten Mäanderabschnitt aufweisen, der mit seinen Schenkeln vorzugsweise orthogonal zur Längsachse des Rohrleitungsbündels angeordnet ist. Ein solcher Mäander kann bei einem Röhrenkollektor, insbesondere bei einem Vakuumröhrenkollektor zur Anwendung kommen.

Bei einer zweckmäßigen Ausgestaltung der Erfindung ist vorgesehen,

- dass mindestens eine Rücklaufleitung zumindest einen ersten und einen zweiten, jeweils in Längsrichtung des Rohrleitungsbündels verlaufenden Rohrleitungsabschnitt aufweist, dass die Rohrleitungsabschnitte der Rücklaufleitung hydraulisch in Reihe geschaltet sind, dass der erste Rohrleitungsabschnitt der Rücklaufleitung auf der Längsmittelachse des Rohrleitungsbündels angeordnet und der zweite Rohrleitungsabschnitt der Rücklaufleitung von der Längsmittelachse des Rohrleitungsbündels derart radial beabstandet ist, dass er außerhalb des ersten Rohrleitungsabschnitts der Rücklaufleitung und außerhalb der geraden Verlängerung des ersten Rohrleitungsabschnitts der Rücklaufleitung liegt, und/oder

- dass mindestens eine Vorlaufleitung zumindest einen ersten und einen zweiten, jeweils in Längsrichtung des Rohrleitungsbündels verlaufenden Rohrleitungsabschnitt aufweist, dass die Rohrleitungsabschnitte der Vorlaufleitung hydraulisch in Reihe geschaltet sind, dass der erste Rohrleitungsabschnitt der Vorlaufleitung auf der Längsmittelachse des Rohrleitungsbündels angeordnet und der zweite Rohrleitungsabschnitt der Vorlaufleitung von der Längsmittelachse des Rohrleitungsbündels derart radial beabstandet ist, dass er außerhalb des ersten Rohrleitungsabschnitts der Vorlaufleitung und außerhalb der geraden Verlängerung des ersten Rohrleitungsabschnitts der Vorlaufleitung liegt.

Die einzelnen Strömungspfade bzw. Stränge des Rohrregisters können dann mithilfe einer Biegevorrichtung, die ein um die Längsmittelachse des ersten Rohrleitungsabschnitts oder des zweiten Rohrleitungsabschnitts drehbar angeordnetes oder in unterschiedliche Drehpositionen bringbaren Biegewerkzeug aufweist, auf einfache Weise kostengünstig durch Biegeverformen gerader Rohre hergestellt werden.

Zweckmäßigerweise ist

- zwischen dem ersten und dem zweiten Rohrleitungsabschnitt der Rücklaufleitung ein Rohrleitungsbereich angeordnet ist, der Krümmungsstellen aufweist, die in Strömungsrichtung des Wärmeträgerfluids hintereinander angeordnet und in zueinander entgegengesetzte Richtungen gekrümmt sind, und/oder

- zwischen dem ersten und dem zweiten Rohrleitungsabschnitt der Vorlaufleitung ein Rohrleitungsbereich angeordnet ist, der Krümmungsstellen aufweist, die in Strömungsrichtung des Wärmeträgerfluids hintereinander angeordnet und in zueinander entgegengesetzte Richtungen gekrümmt sind.

Dabei haben die die Krümmungsstellen aufweisenden Rohrleitungsabschnitte vorzugsweise bei allen Rücklauf- und Vorlaufleitungen die gleichen Abmessungen, so dass diese Rohrleitungsabschnitte vorzugsweise mit demselben Biegewerkzeug aus einer geraden Rohrleitung gebogen werden können. Lediglich die Richtung, in der die gekrümmten Rohrleitungsabschnitte relativ zur Längsmittelachse der ersten und zweiten Rohrleitungsabschnitte angeordnet sind, kann sich bei den einzelnen Rücklauf- und Vorlaufleitungen unterscheiden.

Bei einer Ausführungsform der Erfindung ist der Verteiler an dem einen Axialende des Rohrleitungsbündels und der Sammler an dem anderen Axialende des Rohrleitungsbündels angeordnet. Der Kollektoreinlass und der Kollektorauslass sind dabei vorzugsweise an einander abgewandten Seiten des Sonnenkollektors angeordnet. Somit können auf einfache Weise mehrere Sonnenkollektoren in einer Reihe nebeneinander angeordnet und hydraulisch in Reihe geschaltet werden.

Bei einer bevorzugten Ausgestaltung der Erfindung weist der Sonnenkollektor mindestens zwei der Rohrregister gemäß einem der Patentansprüche 1 bis 10 auf, wobei ein erstes Rohrregister einen ersten Verteiler sowie einen ersten Sammler und ein zweites Rohrregister einen zweiten Verteiler sowie einen zweiten Sammler hat, wobei die Rohrleitungsbündel des ersten und zweiten Rohregisters parallel nebeneinander verlaufen, wobei der erste Verteiler und der zweite Sammler an einem ersten Axialende der aus den Rohrleitungsbündeln gebildeten Rohrleitungsbündel-Anordnung vorgesehen und der erste Sammler sowie der zweite Verteiler an dem vom ersten Axialende entfernten zweiten Axialende der Rohrleitungsbündel-Anordnung vorgesehen sind, und wobei die Auslassöffnung des ersten Sammlers mit der Einlassöffnung des zweiten Verteilers über eine Brücke hydraulisch verbunden ist. Bei dieser Ausgestaltung hat der Sonnenkollektor bevorzugt eine gerade Anzahl von Strömungspfaden. Hiedurch kann auf einfache Weise eine gleichmäßige Durchströmung der Strömungspfade mit dem Wärmeträgerfluid erreicht werden. Bevorzugt ist sowohl der Kollektoreinlass als auch der Kollektorauslass am ersten Axialende der Rohrleitungsbündel-Anordnung vorgesehen. Gegebenenfalls ist es sogar möglich, dass die beiden Rohrregister baugleich ausgestaltet und beispielsweise spiegelsymetrisch zueinander angeordnet sind.

Bei einer vorteilhaften Ausgestaltung der Erfindung ist vorgesehen,

- dass der Verteiler einen ersten Flansch oder ein erstes Formstück aufweist, an dem die jeweils mit einer Rücklaufleitung verbundenen Austrittsöffnungen in einem vorzugsweise konstanten Winkelversatz um ein Zentrum herum angeordnet sind, und/oder
- dass der Sammler einen zweiten Flansch oder ein zweites Formstück aufweist, an dem die jeweils mit einer Vorlaufleitung verbundenen Eintrittsöffnungen in einem vorzugsweise konstanten Winkelversatz um ein Zentrum herum angeordnet sind.

Dabei ist die Ebene, in der sich der Flansch des Verteilers erstreckt, vorzugsweise orthogonal zur Längsmittelachse des Rohrleitungsbündels angeordnet. In entsprechender Weise ist die Ebene, in der sich der Flansch des Sammlers erstreckt, vorzugsweise orthogonal zur Längsmittelachse des Rohrleitungsbündels angeordnet. Die Rücklaufleitungen können mit dem Flansch des Verteilers und die Vorlaufleitungen mit dem Flansch des Sammlers verlötet sein. Das Formstück kann Kupplungen und/oder Schraubanschlüsse zum Verbinden mit den Rücklauf- bzw. Vorlaufleitungen haben. Insbesondere kann das Formstück als Gussteil ausgestaltet sein.

Nachstehend sind Ausführungsbeispiele der Erfindung anhand der Zeichnung näher erläutert. Es zeigen

Fig. 1      eine perspektivische Teildarstellung eines ersten Ausführungsbeispiels eines Sonnenkollektors, wobei der Sonnenkollektor teilweise im Querschnitt dargestellt ist,

Fig. 2      eine perspektivische Ansicht eines Rohrregisters eines Sonnenkollektors, das ein Rohrleitungsbündel mit Vor- und Vorlaufleitungen aufweist,

Fig. 3      eine Teildarstellung des Rohrregisters, welche einen Verteiler und einen Sammler zeigt, wobei die Rohrleitungen des Rohrleitungsbündels nur teilweise dargestellt sind,

Fig. 4      eine perspektivische Darstellung eines ersten und siebten Strömungspfads bzw. Strangs des Sonnenkollektors,

Fig. 5      eine nicht maßstäbliche Stirnseitenansicht des in Fig. 4 abgebildeten Strangs,

Fig. 6      eine Teilaufsicht auf den in Fig. 4 abgebildeten Strang in nicht maßstäblicher Darstellung,

Fig. 7      eine perspektivische Darstellung eines zweiten und sechsten Strömungspfads bzw. Strangs des Sonnenkollektors,

Fig. 8      eine nicht maßstäbliche Stirnseitenansicht des in Fig. 7 abgebildeten Strangs,

Fig. 9      eine Teilaufsicht auf den in Fig. 7 abgebildeten Strang in nicht maßstäblicher Darstellung,

Fig. 10      eine perspektivische Darstellung eines dritten und fünften Strömungspfads bzw. Strangs des Sonnenkollektors,

Fig. 11      eine nicht maßstäbliche Stirnseitenansicht des in Fig. 10 abgebildeten Strangs,

Fig. 12      eine Teilaufsicht auf den in Fig. 10 abgebildeten Strang in nicht maßstäblicher Darstellung,

Fig. 13      eine perspektivische Darstellung eines vierten Strömungspfads bzw. Strangs des Sonnenkollektors,

Fig. 14      eine nicht maßstäbliche Stirnseitenansicht des in Fig. 13 abgebildeten Strangs,

Fig. 15 eine Teilaufsicht auf den in Fig. 13 abgebildeten Strang in nicht maßstäblicher Darstellung,

Fig. 16 eine Teilansicht des Rohrleitungsbündels,

Fig. 17 einen Querschnitt durch den Verteiler entlang der in Fig. 3 mit XVII bezeichneten Ebene,

Fig. 18 einen Querschnitt durch den Sammler entlang der in Fig. 3 mit XVIII bezeichneten Ebene,

Fig. 19 einen Querschnitt durch ein Rohrleitungsbündel entlang der in Fig. 2 mit XIX bezeichneten Ebene,

Fig. 20 zwei in Reihe geschaltete Sonnenkollektoren, die jeweils zwei in Reihe geschaltete Rohrregister haben, wobei die zwischen den Verteilern und den Sammlern der Sonnenkollektoren befindlichen Komponenten der Sonnenkollektoren aus Gründen der Übersichtlichkeit nicht dargestellt sind, und

Fig. 21 eine Aufsicht auf einen Anschlussflansch eines Sonnenkollektors, der zwei hydraulisch in Reihe geschaltete Rohrregister hat, deren Vor- und Rücklaufleitungen ein gemeinsames Rohrleitungsbündel bilden, wobei der Anschlussflansch drei Eintrittsöffnungen für einen Sammler eines ersten Rohrregisters und drei Austrittsöffnungen für einen Verteiler eines zweiten Rohrregisters aufweist.

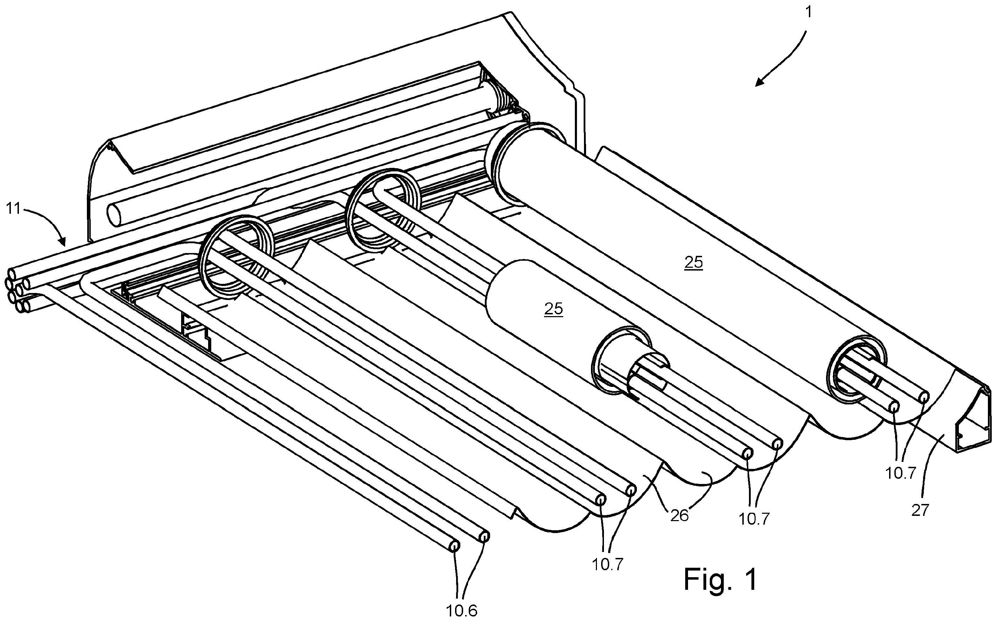

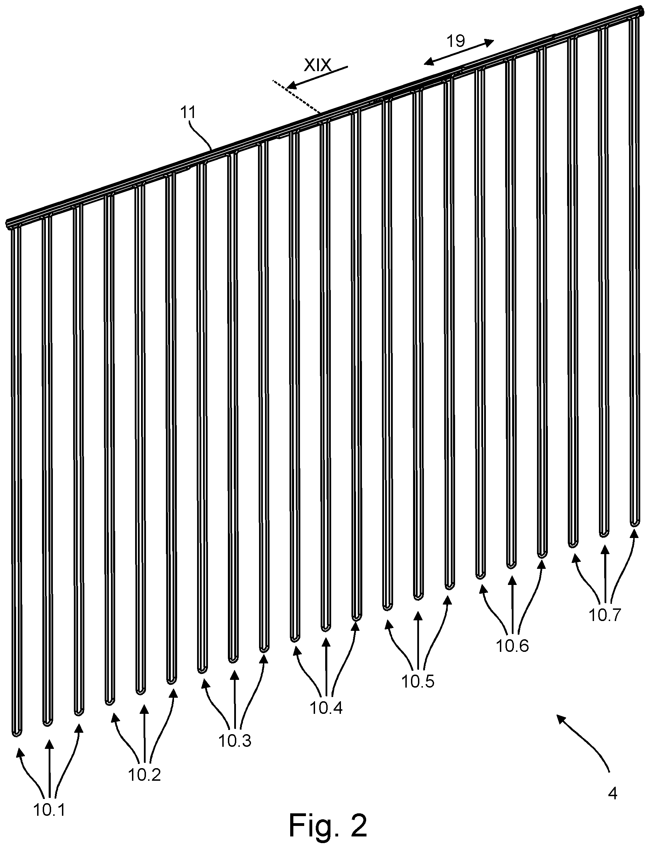

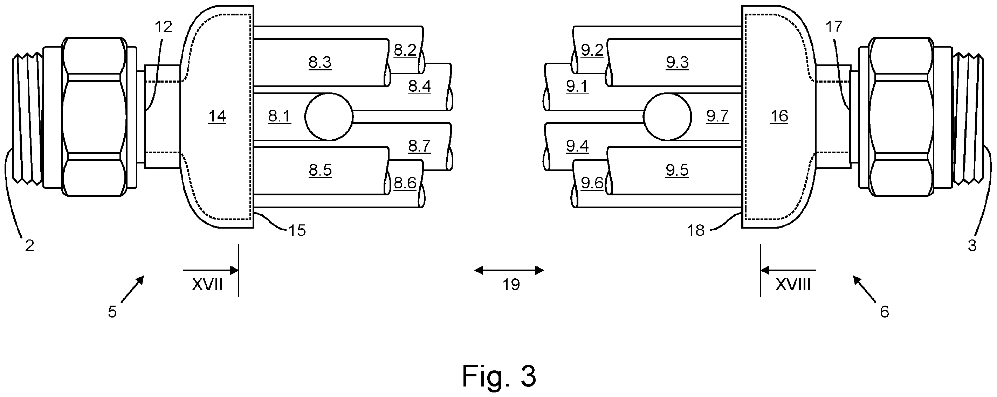

Ein in Fig. 1 im Ganzen mit 1 bezeichneter Sonnenkollektor hat einen Kollektoreinlass 2 und einen Kollektorauslass 3 für ein Wärmeträgerfluid, wie z.B. Wasser. Außerdem weist der Sonnenkollektor 1 ein mit dem Wärmeträgerfluid durchströmbares Rohrregister 4 auf, welches in Fig. 2 abgebildet ist. In Fig. 3 ist zu sehen, dass das Rohrregister 4 einen Verteiler 5 und einen Sammler 6 für das Wärmeträgerfluid hat, die über sieben, hydraulisch parallel zueinander geschaltete Strömungspfade 7.1 bis 7.7 bzw. Stränge miteinander verbunden sind.

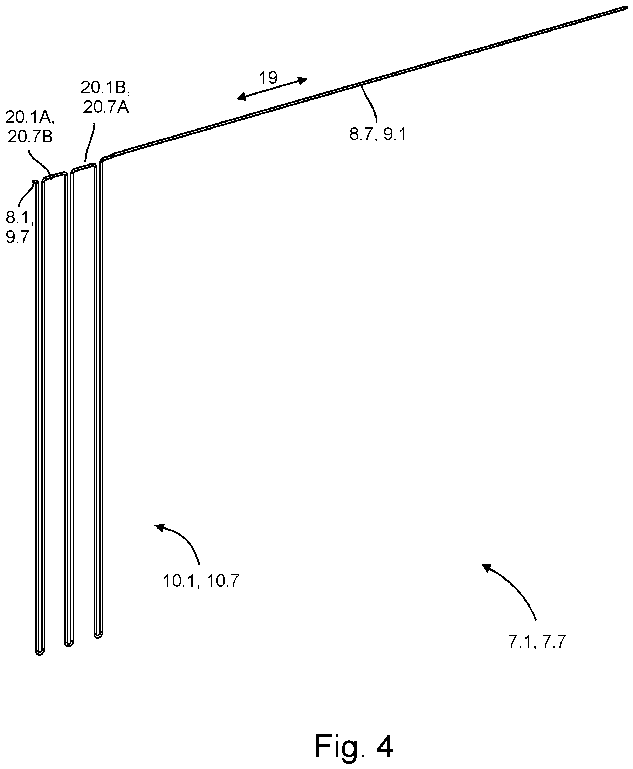

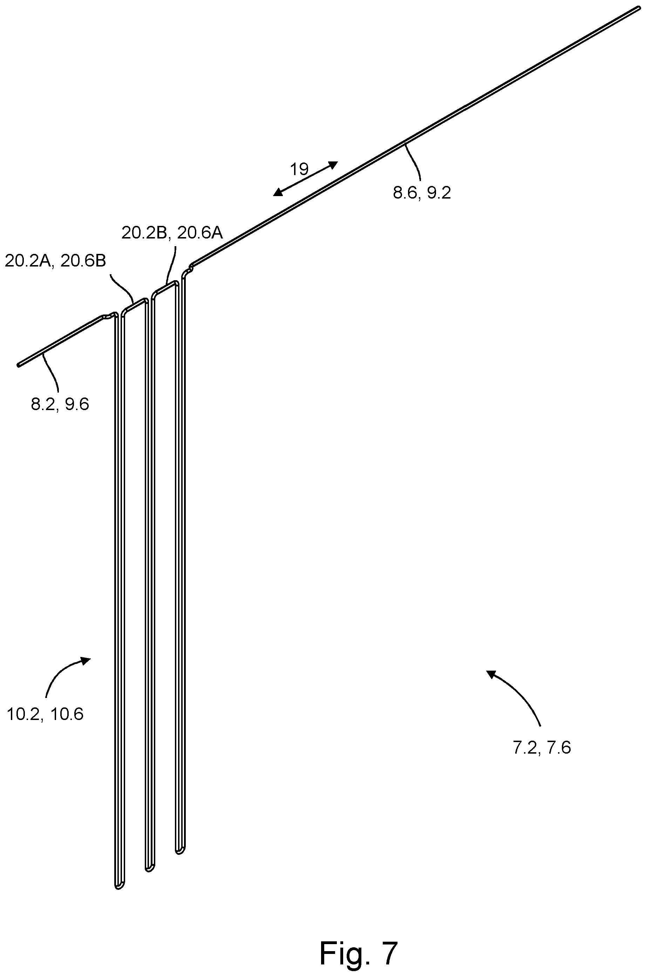

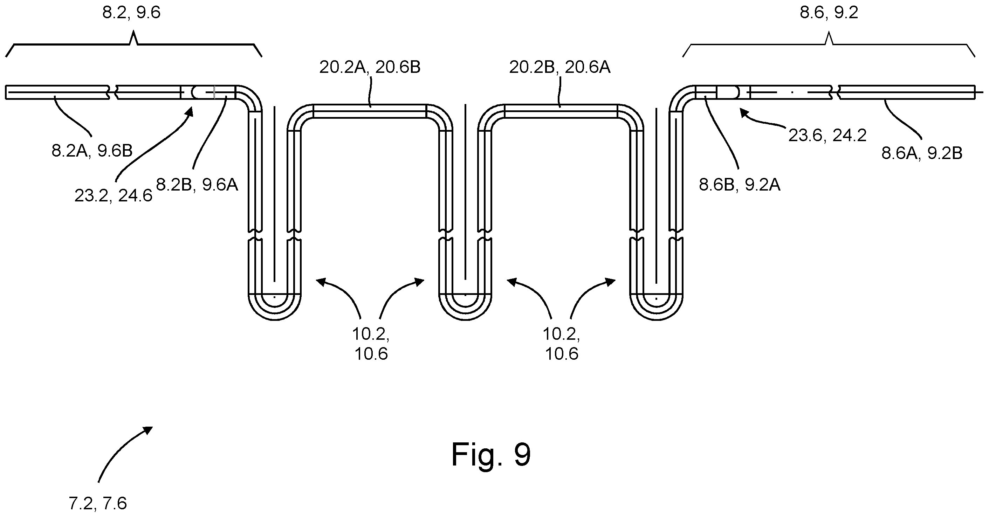

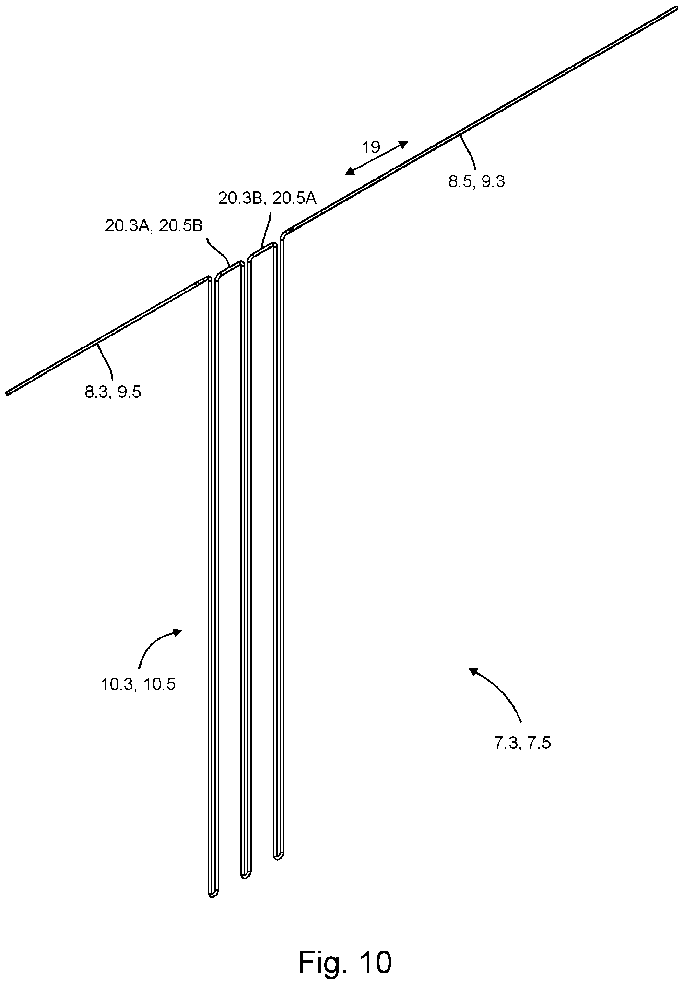

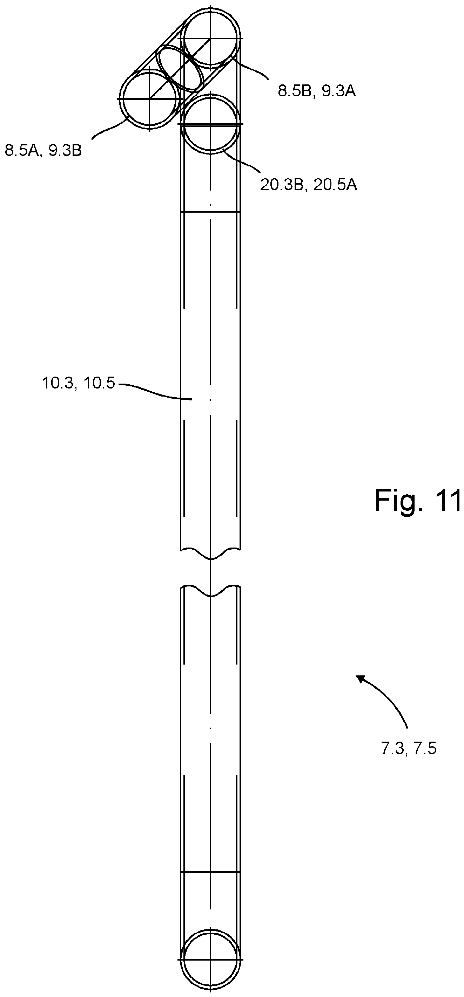

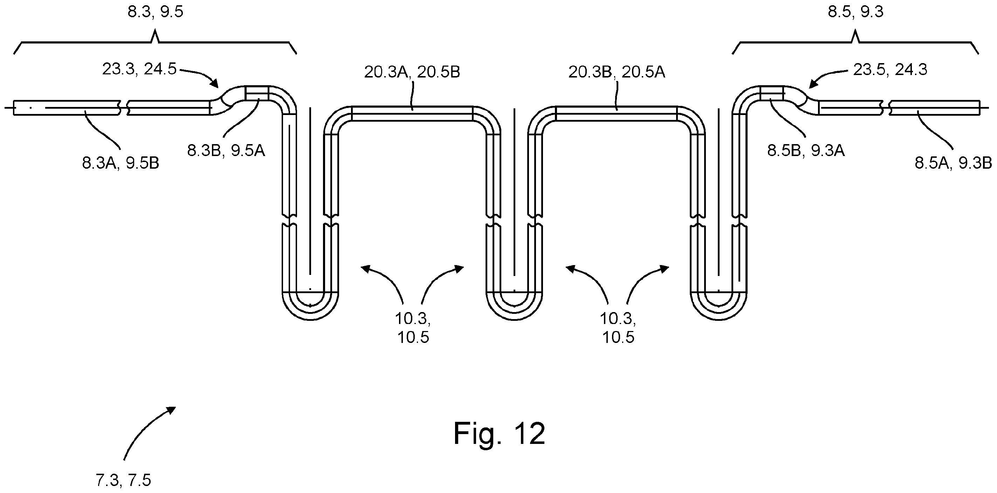

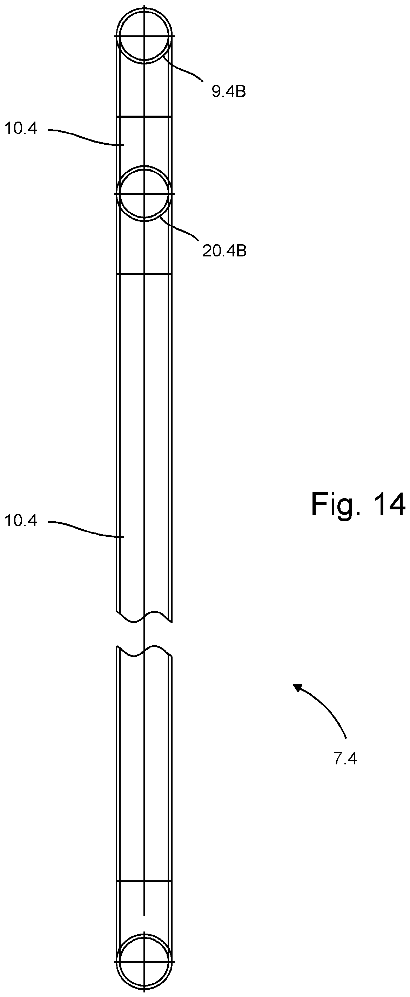

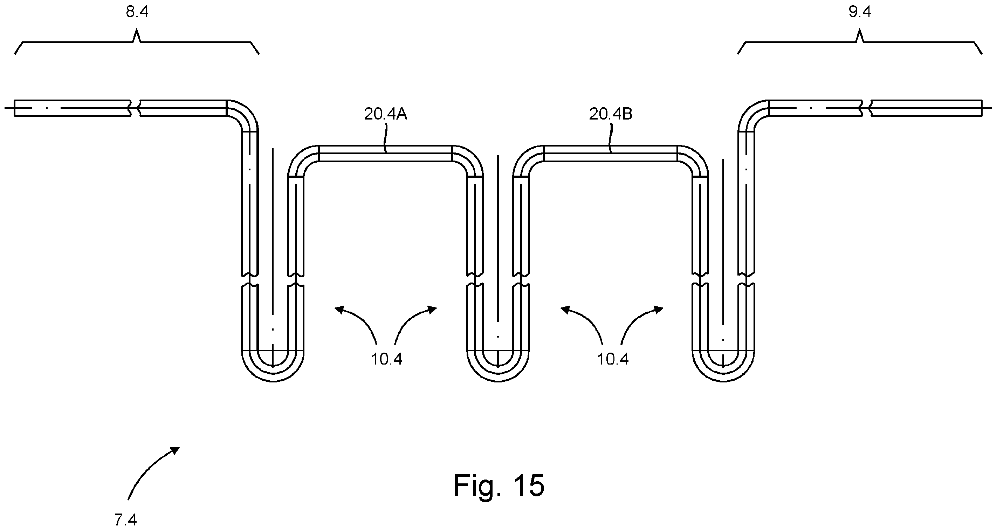

Wie in Fig. 4 bis 15 zu sehen ist, hat jeder Strömungspfad 7.1 bis 7.7 jeweils eine Rücklaufleitung 8.1 bis 8.7, eine Vorlaufleitung 9.1 bis 9.7 und drei zwischen der Rücklaufleitung 8.1 bis 8.7 und der Vorlaufleitung 9.1 bis 9.7 angeordnete, in Reihe geschaltete Absorberleitungen 10.1 bis 10.7. Über die Absorberleitungen 10.1 bis 10.7 wird bei Sonneneinstrahlung auf den Sonnenkollektor thermischer Solarenergie auf das Wärmeträgerfluid übertragen. Wie in Fig. 1 und 2 zu sehen ist, sind die Absorberleitungen 10.1 bis 10.7 in der Aufsicht auf die zur Sonnenbestrahlung vorgesehene Vorderseite des Sonnenkollektors 1 quer zu ihrer Längserstreckung in versetzt nebeneinander angeordnet. Dabei sind die Längsmittelachse der Absorberleitungen 10.1 bis 10.7 in einer gemeinsamen Ebene angeordnet.

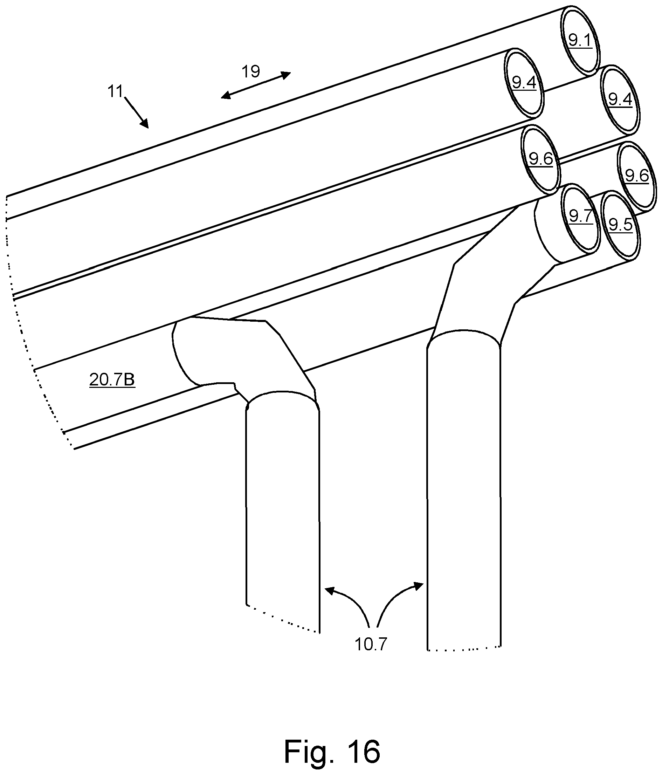

Wie in Fig. 1 und 16 besonders gut erkennbar ist, verlaufen die Rücklaufleitungen 8.1 bis 8.7 und die Vorlaufleitungen 9.1 bis 9.7 derart nebeneinander, dass sie ein Rohrleitungsbündel 11 bilden. Das Rohrleitungsbündel 11 erstreckt sich mit seiner Längsachse in eine Richtung, in der die Absorberleitungen 10.1 bis 10.7 zueinander versetzt sind. Die Längsmittelachse des Rohrleitungsbündels 11 ist in der von den Absorberleitungen 10.1 bis 10.7 aufgespannten Ebene angeordnet oder dicht zu dieser benachbart.

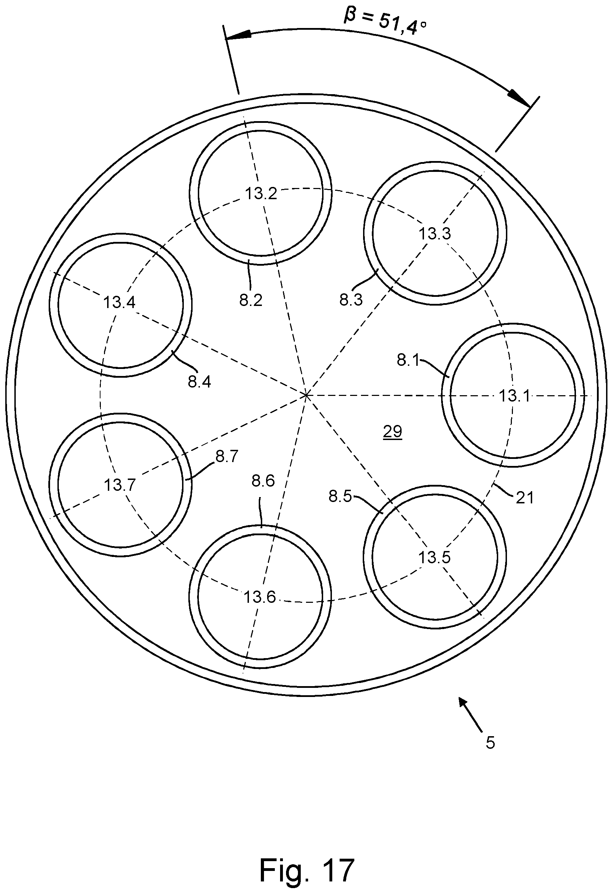

Wie in Fig. 3 und 17 zu sehen ist, hat der Verteiler 5 eine mit dem Kollektoreinlass 2 verbundene Einlassöffnung 12 und mehrere Austrittsöffnungen 13.1 bis 13.7, die über eine in dem Verteiler 5 vorgesehene Verteilerkammer 14 hydraulisch mit der Einlassöffnung 12 verbunden sind. An jeder Austrittsöffnung 13.1 bis 13.7 ist jeweils eine Rücklaufleitung 8.1 bis 8.7 angeschlossen.

Der Verteiler 5 hat einen scheibenförmigen Verteilerflansch 29, in dem die Austrittsöffnungen 13.1 bis 13.7 angeordnet sind. Der Verteilerflansch 29 ist in einer Ebene angeordnet, die orthogonal zur Längsmittelachse des Rohrleitungsbündels 11 angeordnet ist. Die Austrittsöffnungen 13.1 bis 13.7 durchsetzen den Verteilerflansch 29 jeweils etwa parallel zur Längsmittelachse des Rohrleitungsbündels 11. In Fig. 17 ist zu sehen, dass die Austrittsöffnungen 13.1 bis 13.7 in konstanten Winkelabständen um ein erstes Zentrum herum versetzt sind. Das erste Zentrum liegt auf der Längsmittelachse des Rohrleitungsbündels 11 und die Mittelpunkte der Austrittsöffnungen 13.1 bis 13.7 liegen auf einer gedachten, konzentrisch zur Längsmittelachse angeordneten Kreislinie. Wie in Fig. 3 zu sehen ist, sind die Austrittsöffnungen 13.1 bis 13.7 des Verteilers 5 in der durch den Doppelpfeil 19 markierten Erstreckungsrichtung des Rohrleitungsbündels 11 an derselben Stelle angeordnet.

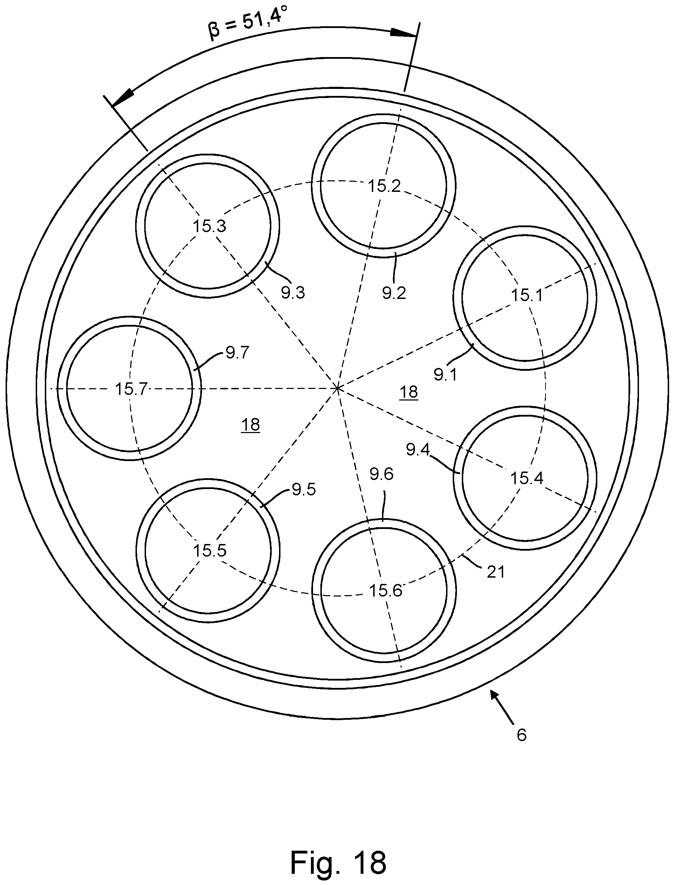

Wie in Fig. 3 und 18 zu sehen ist, hat der Sammler 6 mehrere Eintrittsöffnungen 15.1 bis 15.7, die über eine in dem Sammler 6 vorgesehene Sammelkammer 16 hydraulisch mit einer Auslassöffnung 17 verbunden sind. Letztere ist über ein kurzes Rohrleitungsstück mit dem Kollektorauslass 3 verbunden. An jeder Eintrittsöffnung 15.1 bis 15.7 ist jeweils eine Vorlaufleitung 9.1 bis 9.7 angeschlossen.

Der Sammler 6 hat einen scheibenförmigen Sammlerflansch 18, in dem die Eintrittsöffnungen 15.1 bis 15.7 angeordnet sind. Der Sammlerflansch 18 ist in einer Ebene angeordnet, die orthogonal zur Längsmittelachse des Rohrleitungsbündels 11 angeordnet ist. Die Eintrittsöffnungen 15.1 bis 15.7 durchsetzen den Sammlerflansch 18 jeweils etwa parallel zur Längsmittelachse des Rohrleitungsbündels 11. In Fig. 18 ist zu sehen, dass die Eintrittsöffnungen 15.1 bis 15.7 in konstanten Winkelabständen um ein zweites Zentrum herum versetzt sind.

Das zweite Zentrum liegt auf der Längsmittelachse des Rohrleitungsbündels 11 und die Mittelpunkte der Eintrittsöffnungen 15.1 bis 15.7 liegen auf einer gedachten, konzentrisch zur Längsmittelachse angeordneten Kreislinie. Wie in Fig. 3 zu sehen ist, sind die Eintrittsöffnungen 15.1 bis 15.7 des Sammlers 6 in der durch den Doppelpfeil 19 markierten Erstreckungsrichtung des Rohrleitungsbündels 11 an derselben Stelle angeordnet.

In den Figuren 2, 4, 7, 10 und 13 ist zu sehen, dass die Absorberleitungen 10.1 bis 10.7 der einzelnen Strömungspfade in der durch den Doppelpfeil 19 markierten Erstreckungsrichtung des Rohrleitungsbündels 11 zueinander versetzt sind, und dass auch die Vorlaufleitungen 9.1 bis 9.7 der einzelnen Strömungspfade unterschiedlich lang sind. Alle Strömungspfade haben im Wesentlichen dieselbe Länge und denselben lichten Rohrleitungsquerschnitt. Somit haben alle Strömungspfade 7.1 bis 7.7 bis auf eine toleranzbedingte Abweichung, die vorzugsweise kleiner als 3% ist, denselben Strömungswiderstand.

In Fig. 4, 7 und 10 ist zu sehen, dass drei Paar Strömungspfade, nämlich

- die Strömungspfade 7.1 und 7.7 (Typ 1),
- die Strömungspfade 7.2 und 7.6 (Typ 2) sowie
- die Strömungspfade 7.3 und 7.5 (Typ 3),

jeweils baugleich ausgestaltet sind. Die baugleich ausgestalteten Strömungspfade sind jeweils spiegelsymmetrisch zu einer Ebene angeordnet, die orthogonal zur Längsmittelachse des Rohrleitungsbündels 11 ausgerichtet ist und mittig zwischen dem Verteiler 5 und dem Sammler 6 verläuft. Somit werden für die sechs Strömungspfade 7.1, 7.2, 7.3. 7.5, 7.6 und 7.7 nur drei Typen von Strömungspfaden bzw. Strängen benötigt. Dies ermöglicht eine einfache Fertigung des Rohrregisters 4.

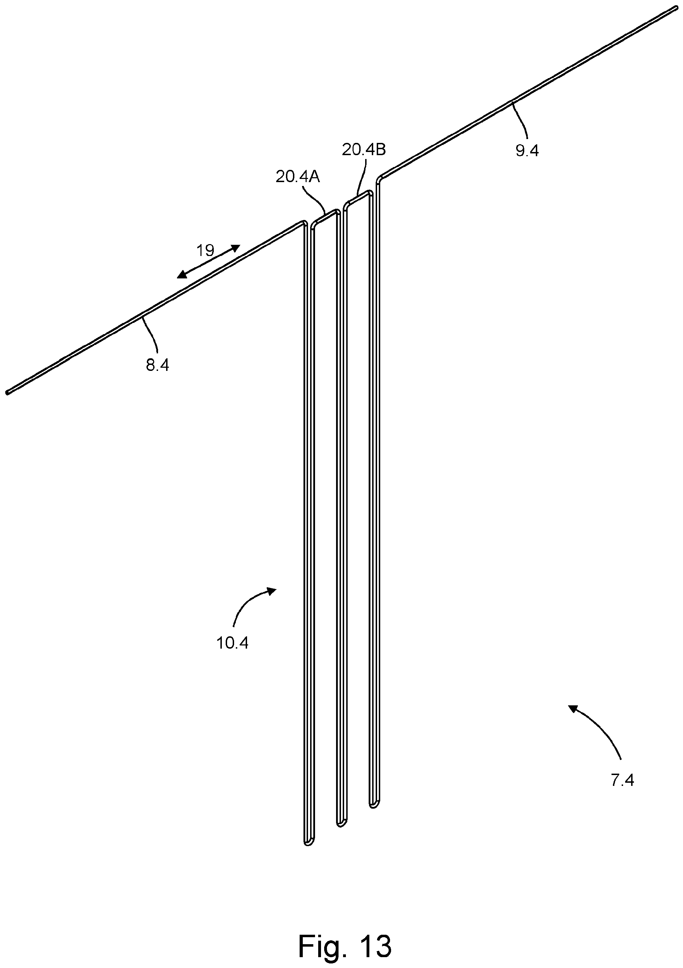

Der Strömungspfad 7.4 (Typ 4) ist zu der oben genannten Ebene spiegelsymmetrisch ausgestaltet. In Fig. 13 ist zu sehen, dass bei dem Strömungspfad 7.4 die Rücklaufleitung 8.4 in gerader Verlängerung zur Vorlaufleitung 9.4 angeordnet ist und dass die Rücklaufleitung 8.4 und die Vorlaufleitung 9.4 die gleiche Länge haben.

Die Rücklaufleitungen 8.1 bis 8.7 und die Vorlaufleitungen 9.1 bis 9.7 haben an ihren der Absorberleitung 10.1 bis 10.7 des betreffenden Strömungspfads 7.1 bis 7.7 zugewandten Endbereichen einen bogenförmigen Rohrabschnitt, bei dessen Durchströmen das Wärmeträgerfluid um 90° abgelenkt wird. Die Absorberleitungen 10.1 bis 10.7 sind als Mäander ausgestaltet, die mehrere in Reihe geschaltete U-förmige Mäanderabschnitte aufweisen, die in einer gemeinsamen Ebene liegen. Jeder U-förmige Mäanderabschnitt hat jeweils zwei parallel zueinander verlaufende gerade Schenkel, die durch ein bogenförmiges Verbindungsstück einstückig miteinander verbunden sind. In dem Verbindungsstück wird die Strömungsrichtung des Wärmeträgerfluids um 180° in die entgegengesetzte Richtung umgelenkt. Zueinander benachbart nebeneinander angeordnete, in Reihe geschaltete U-förmige Mäanderabschnitte sind jeweils durch zwei 90°-Bögen und eine zwischen diesen befindliches gerade Verbindungsleitung 20.1A .. 20.7A, 20.1B .. 20.7 B, welche in dem Rohrleitungsbündel 11 in Längserstreckungsrichtung des Rohrleitungsbündels 11 verläuft, einstückig miteinander verbunden. Bei dem Ausführungsbeispiel gemäß den Fig. 2, 4, 7, 10 und 13 sind in jedem Strömungspfad 7.1, 7.2, 7.3, 7.4, 7.5, 7.6 und 7.7 jeweils drei U-förmige Mäander in Reihe geschaltet. Es sind aber auch Ausgestaltungen denkbar, bei denen die Strömungspfade 7.1, 7.2, 7.3, 7.4, 7.5, 7.6 und 7.7 eine andere Anzahl in Reihe geschalteten Mäandern aufweisen.

In Fig. 4, 7, 10 und 13 ist zu sehen, dass bei unterschiedlichen Strömungspfad-Typen die Mäander in unterschiedlichen Abständen zu den von den Mäandern entfernten Enden der Vor- bzw. Vorlaufleitung 8.1 bis 8.7 bzw. 9.1 bis 9.7 angeordnet sind.

Bei den Strömungspfad-Typen 1, 2 und 3 sind die Abstände zwischen dem Mäander und von davon entfernten Enden der Vor- bzw. Vorlaufleitung 8.1 bis 8.7 bzw. 9.1 bis 9.7 jeweils unterschiedlich. Bei dem Strömungspfad-Typ 4 ist der Mäander mittig zwischen den vom Mäander entfernten Ende der Rücklaufleitung 8.4 und dem vom Mäander entfernten Ende der Vorlaufleitung 9.4 angeordnet.

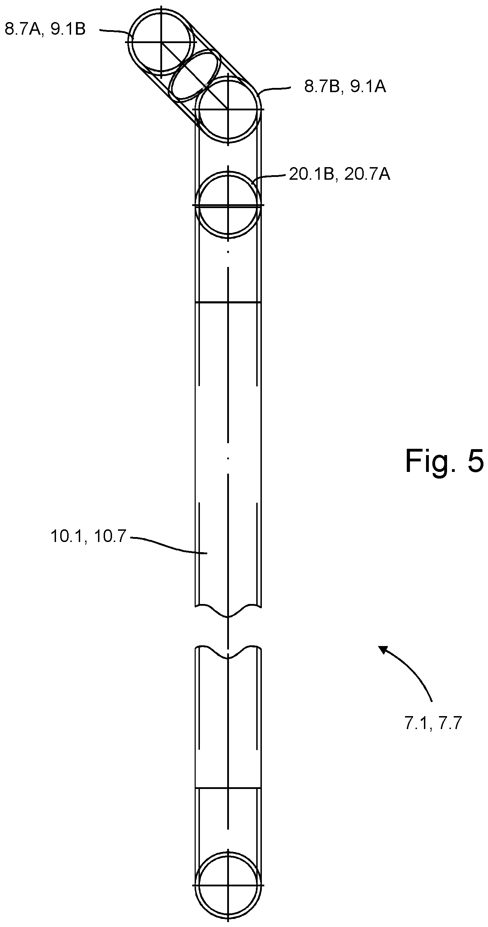

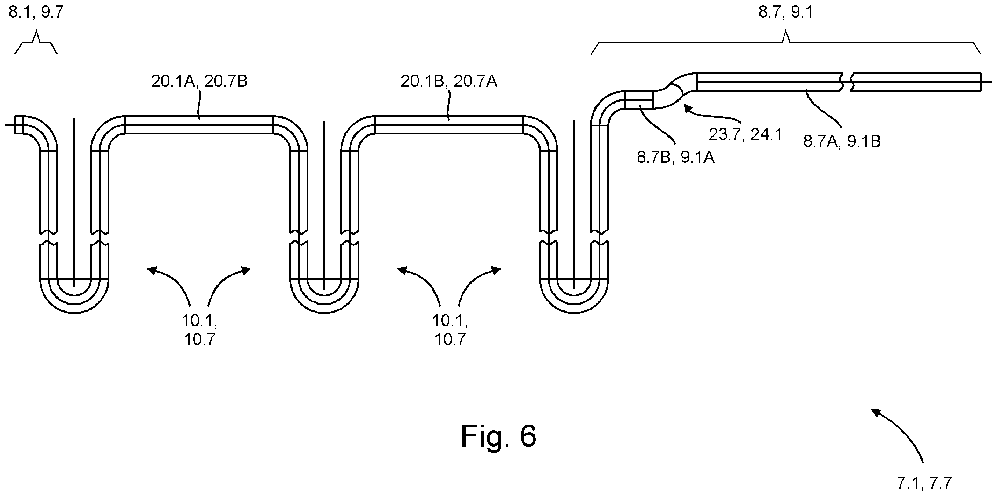

Wie in den Fig. 5, 6 zu sehen ist, weisen die Vorlaufleitung 9.1 des Strömungspfads 7.1 und die Rücklaufleitung 8.7 des Strömungspfads 7.7 jeweils zwei in Reihe geschaltete Rohrleitungsabschnitte 9.1A, 9.1B, 8.7A, 8.7B auf, die im Wesentlichen in Längsrichtung des Rohrleitungsbündels 11 verlaufen. Die Längsachsen dieser Rohrleitungsabschnitte 9.1A, 9.1B, 8.7A, 8.7B sind quer zur Längsrichtung des Rohrleitungsbündels 11 zueinander versetzt.

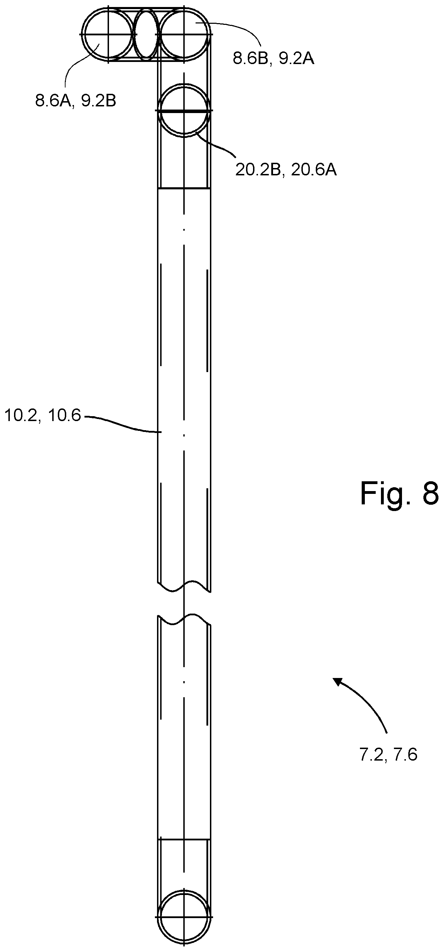

Bei den Strömungspfaden 7.2, 7.3, 7.5, 7.6 haben jeweils sowohl die Vorlaufleitung 9.2, 9.3, 9.5, 9.6 als auch die Rücklaufleitung 8.2, 8.3, 8.5, 8.6 zwei in Reihe geschaltete Rohrleitungsabschnitte 8.2A, 8.2B, 8.3A, 8.3B, 8.5A, 8.5B, 8.6A, 8.6B bzw. 9.2A, 9.2B, 9.3A, 9.3B, 9.5A, 9.5B, 9.6A, 9.6B, die im Wesentlichen in Längsrichtung des Rohrleitungsbündels 11 verlaufen (Fig. 8, 9, 11 und 12). Die Längsachsen dieser Rohrleitungsabschnitte 8.2A, 8.2B, 8.3A, 8.3B, 8.5A, 8.5B, 8.6A, 8.6B bzw. 9.2A, 9.2B, 9.3A, 9.3B, 9.5A, 9.5B, 9.6A, 9.6B sind quer zur Längsrichtung des Rohrleitungsbündels 11 zueinander versetzt.

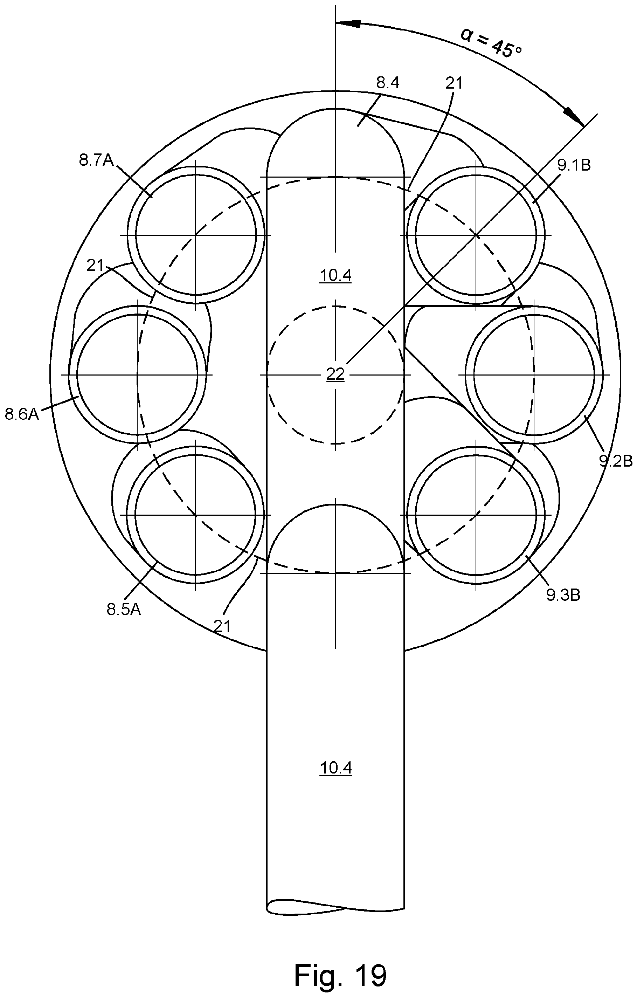

Wie in den Fig. 17 und 18 zu sehen ist, schneiden sieben in Erstreckungsrichtung 19 des Rohrleitungsbündels 11 verlaufende Rohrleitungsabschnitte 8.1, 8.2A, 8.3A, 8.4, 8.5A, 8.6A, 8.7A der Rücklaufleitungen und sieben in Erstreckungsrichtung 19 des Rohrleitungsbündels 11 verlaufende Rohrleitungsabschnitte 9.1B, 9.2B, 9.3B, 9.4, 9.5B, 9.6B, 9.7 der Vorlaufleitungen des Rohrleitungsbündels 11 die Zylindermantelfläche 21 eines gedachten, zur Längsmittelachse des Rohrleitungsbündels 11 konzentrischen Zylinders. Dabei liegen in einer orthogonal zur Längsmittelachse des Rohrleitungsbündels 11 verlaufenden, der Zeichenebene in Fig. 19 entsprechenden Ebene die Mittelpunkte der Rohrleitungsabschnitte 8.1, 8.2A, 8.3A, 8.4, 8.5A, 8.6A, 8.7A, 9.1B, 9.2B, 9.3B, 9.4, 9.5B, 9.6B, 9.7 in der Zylindermantelfläche 21.

Die Rohrleitungsabschnitte sind in Umfangsrichtung der Zylindermantelfläche zueinander versetzt nebeneinander angeordnet und derart radial von der Zylinderachse der Zylindermantelfläche 21 beabstandet, dass zwischen den in Umfangsrichtung der Zylindermantelfläche 21 zueinander versetzten Rohrleitungsabschnitten 8.1, 8.2A, 8.3A, 8.4, 8.5A, 8.6A, 8.7A, 9.1B, 9.2B, 9.3B, 9.4, 9.5B, 9.6B, 9.7 bzw. deren gerader Verlängerungen ein sich entlang der Zylinderachse erstreckender Zwischenraum 22 (Fig. 19) gebildet ist, dessen Querschnittsabmessungen zur Aufnahme eines weiteren Rohrleitungsabschnitts 8.2B, 8.3B, 8.5B, 8.6B, 8.7B, 9.1A, 9.2A, 9.3A, 9.5A, 9.6A geeignet ist, dessen Querschnittsabmessungen den Querschnittsabmessungen eines der in Umfangsrichtung der Zylindermantelfläche zueinander versetzten Rohrleitungsabschnitte 8.1, 8.2A, 8.3A, 8.4, 8.5A, 8.6A, 8.7A, 9.1B, 9.2B, 9.3B, 9.4, 9.5B, 9.6B, 9.7 entspricht. In dem Zwischenraum ist der weitere Rohrleitungsabschnitt 8.2B, 8.3B, 8.5B, 8.6B, 8.7B, 9.1A, 9.2A, 9.3A, 9.5A, 9.6A im Wesentlichen konzentrisch zur Längsmittelachse des Rohrleitungsbündels 11 angeordnet.

Die Rücklaufleitungen 8.2, 8.3, 8.5, 8.6 und 8.7 haben jeweils zusätzlich zu dem ersten Rohrleitungsabschnitt 8.2B, 8.3B, 8.5B, 8.6B, 8.7B einen zweiten Rohrleitungsabschnitt 8.2A, 8.3A, 8.5A, 8.6A, 8.7A, der in radialer Richtung von der Längsmittelachse des Rohrleitungsbündels 11 beabstandet ist und die Zylindermantelfläche 21 schneidet. Die ersten Rohrleitungsabschnitte 8.2B, 8.3B, 8.5B, 8.6B und 8.7B und die zweiten Rohrleitungsabschnitte 8.2A, 8.3A, 8.5A, 8.6A und 8.7A sind hydraulisch in Reihe geschaltet. Zwischen ersten Rohrleitungsabschnitten 8.2B, 8.3B, 8.5B, 8.6B, 8.7B und zweiten Rohrleitungsabschnitten 8.2A, 8.3A, 8.5A, 8.6A, 8.7A die derselben Rücklaufleitung 8.2, 8.3, 8.5, 8.6, 8.7 zugeordnet sind, ist jeweils ein Rohrleitungsbereich 23.2 bis 23.7 angeordnet ist, der zwei Krümmungsstellen aufweist, die in Strömungsrichtung des Wärmeträgerfluids hintereinander angeordnet und in zueinander entgegengesetzte Richtungen gekrümmt sind.

Die Vorlaufleitungen 9.1, 9.2. 9.3, 9.5 und 9.6 haben jeweils zusätzlich zu dem ersten Rohrleitungsabschnitt 9.1A, 9.2A, 9.3A, 9.5A und 9.6A einen zweiten Rohrleitungsabschnitt 9.1B, 9.2B, 9.3B, 9.5B und 9.6B, der in radialer Richtung von der Längsmittelachse des Rohrleitungsbündels 11 beabstandet ist und die Zylindermantelfläche 21 schneidet. Die ersten Rohrleitungsabschnitte 9.1A, 9.2A, 9.3A, 9.5A und 9.6A und die zweiten Rohrleitungsabschnitte 9.1B, 9.2B, 9.3B, 9.5B und 9.6B sind hydraulisch in Reihe geschaltet. Zwischen ersten Rohrleitungsabschnitten 9.1A, 9.2A, 9.3A, 9.5A und 9.6A und zweiten Rohrleitungsabschnitten 9.1B, 9.2B, 9.3B, 9.5B und 9.6B, die derselben Vorlaufleitung 9.1, 9.2, 9.3, 9.5, 9.6 zugeordnet sind, ist jeweils ein Rohrleitungsbereich 24.1 bis 24.6 angeordnet ist, der zwei Krümmungsstellen aufweist, die in Strömungsrichtung des Wärmeträgerfluids hintereinander angeordnet und in zueinander entgegengesetzte Richtungen gekrümmt sind.

Erwähnt werden soll noch, dass die einzelnen Absorberleitungen 10.1 bis 10.7 jeweils in der Innenhöhlung eines Hüllrohrs 25 angeordnet sind, das in Fig. 1 nur teilweise dargestellt ist. Die Hüllrohre 25 sind an ihren dem Rohrleitungsbündel 11 angewandten Enden geschlossen und an ihrem dem Rohrleitungsbündel 11 zugewandten Ende mit Hilfe einer Dichtung abgedichtet. Die Hüllrohre 25 bestehen aus einem für Sonnenlicht durchlässigen Material, vorzugsweise aus Borsilikatglas. Wie in Fig. 1 zu sehen ist, sind die Hüllrohre 25 doppelwandig mit einen zwischen einer inneren und einer äußeren Hüllrohrwand befindlichen Hohlraum ausgestaltet. Der Hohlraum kann evakuiert oder mit einer Schutzgas gefüllt sein. An der der Sonnenbestrahlungsseite abgewandten Rückseite der Hüllrohre 25 sind Reflektoren 26 angeordnet, deren Geometrie derart gewählt ist, dass auf die Reflektoren 26 auftreffende Sonnenstrahlung in Richtung auf die Absorberleitungen 10.1 bis 10.7 gebündelt wird.

Das Rohrregister 4, der Verteiler 5, der Sammler 6, die Hüllrohre 25 und die Reflektoren 26 sind an einer Trägerkonstruktion 27 angeordnet. Bei dem in den Fig. 1 bis 18 gezeigten Ausführungsbeispiel ist der Verteiler 5 an dem einen Axialende des Rohrleitungsbündels 11 und der Sammler 6 an dem anderen Axialende des Rohrleitungsbündels 11 angeordnet.

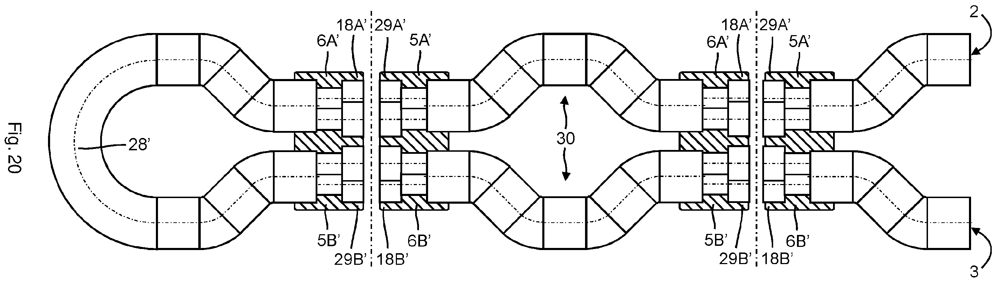

Bei dem in Fig. 20 gezeigten Ausführungsbeispiel hat der Sonnenkollektor zwei hydraulisch in Reihe geschaltete Rohrregister, deren Vor- und Vorlaufleitungen jeweils derart nebeneinander verlaufen, dass sie ein Rohrleitungsbündel bilden. Jedes Rohrregister hat jeweils drei Strömungspfade, die jeweils eine Rücklaufleitung, eine Vorlaufleitung und eine zwischen der Rücklauf- und der Vorlaufleitung angeordnete Absorberleitung zur Übertragung von thermischer Solarenergie auf das Wärmeträgerfluid umfassen. Jedes Rohrregister hat jeweils einen Verteiler 5A', 5B' und einen Sammler 6A', 6B' für das Wärmeträgerfluid.

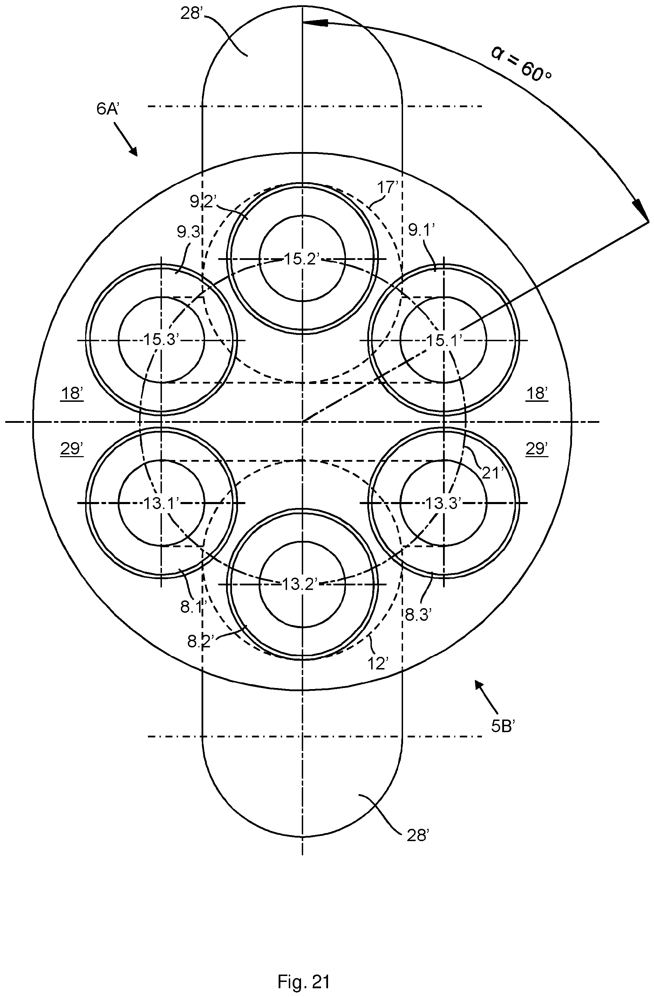

Wie in Fig. 21 zu sehen ist, weisen die Verteiler 5A', 5B' jeweils, eine Einlassöffnung 12' und drei über interne Kanäle damit hydraulisch verbundene, an einem Verteilerflansch 29' angeordnete Austrittsöffnungen 13.1', 13.2', 13.3' auf. Die Sammler 6A', 6B' haben jeweils drei an einem Sammlerflansch 18' vorgesehene Eintrittsöffnungen 15.1', 15,2', 15.3' und eine über interne Kanäle mit diesen hydraulisch verbundene Auslassöffnung 17'.

Die Einlassöffnung 12' des Verteilers 5A' eines ersten Rohrregisters ist mit dem Kollektoreinlass 2 verbunden. Jede Austrittsöffnung dieses Verteilers 5A' ist jeweils über einen Strömungspfad des ersten Rohrregisters mit einer der betreffenden Austrittsöffnung zugeordneten Eintrittsöffnung 15.1', 15,2', 15.3' des Sammlers 6A' des ersten Rohrregisters verbunden. Die Auslassöffnung 17' des Sammlers 6A' des ersten Rohrregisters ist über eine Brücke 28' mit der Einlassöffnung 12' des Verteilers 5B' des zweiten Rohrregisters verbunden.

Jede Austrittsöffnung 13.1', 13.2', 13.3' des Verteilers 5B' des zweiten Rohrregisters ist jeweils über einen Strömungspfad des zweiten Rohrregisters mit einer Eintrittsöffnung des Sammlers 6B' des zweiten Rohrregisters verbunden. Die Auslassöffnung 17' des Verteilers 5B' des zweiten Rohrregisters ist mit einem Kollektorauslass 3 verbunden. Kollektoreinlass 2 und Kollektorauslass 3 sind also an derselben Seite des Sonnenkollektors angeordnet. Dies ermöglicht eine einfache und zeitsparende Montage der Anschlussverrohrung.

In Fig. 21 ist zu sehen, dass die Austritts- bzw. Eintrittsöffnungen 13.1, 13.2, 13.3, 15.1, 15.2, 15.3 in einem konstanten Winkelabstand von 60° um ein Zentrum herum zueinander versetzt sind. Das Zentrum liegt auf der Längsmittelachse des Rohrleitungsbündels und die Mittelpunkte der Austritts- bzw. Eintrittsöffnungen 13.1, 13.2, 13.3, 15.1, 15.2, 15.3 liegen in einer gedachten, konzentrisch zur Längsmittelachse verlaufenden Zylindermantelfläche 21'.

Die Ausgestaltung der die Strömungspfade bildenden Rohrleitungen der Rohrregister des in Fig. 20 gezeigten Ausführungsbeispiels entspricht im Wesentlichen der Ausgestaltung der in den Fig. 4 bis 12 gezeigten Rohrleitungen, jedoch mit dem Unterschied, dass die Winkel, um den die den Absorberleitungen zugewandten Enden der Rohrleitungsabschnitte

- 8.7A und 9.1B,
- 8.2A und 9.6B,
- 8.6A und 9.2B,
- 8.3A und 9.5B,
- 8.5A und 9.3B

um die Längsmittelachse des Rohrleitungsbündels zueinander versetzt sind, aufgrund der geringeren Anzahl von Strömungspfaden (6 statt 7) größer gewählt ist bei den betreffenden Rohrleitungen der Fig. 4 bis 12. Der Winkelversatz $\alpha$ kann aus der Anzahl n der Strömungspfade wie folgt berechnet werden:

$$\alpha = 360° / (n+1).$$

Er beträgt somit bei den Ausführungsbeispielen gemäß den Fig. 1 bis 19 360° / (7+1) = 45,0° und bei dem Ausführungsbeispiel gemäß den Fig. 20 und 21 360° / (6+1) = 51,4°. Unter Berücksichtigung dieses Unterschieds gilt die Beschreibung für die in den Fig. 4 bis 12 gezeigten Rohrleitungen für die Rohrleitungen des in den Fig. 20 und 21 gezeigten Ausführungsbeispiels entsprechend.

Bei einer vorteilhaften platzsparenden Ausführung, bei der die Registerrohrenden unterschiedlich um die Längsmittelachse des Rohrleitungsbündels tordiert sind, beträgt der Winkelversatz in der Ebene der Einlassöffnungen des Sammlers und der Austrittsöffnungen der Verteiler $\beta$ = 360° / n. Er beträgt somit bei den Ausführungsbeispielen gemäß den Fig. 1 bis 19 360° / 7 = 51,4° und bei dem Ausführungsbeispiel gemäß den Fig. 20 und 21 360° / 6 = 60,0°.

Erwähnt werden soll noch, dass bei dem Ausführungsbeispiel in Fig. 20 links die Brücke 28' besonders vorteilhaft mit Hilfe von Verschraubungen lösbar mit den beiden Rohrregistern des Sonnenkollektors verbindbar ist und dass anstelle der Brücke 28' auch Verbindungsrohre 30 an der Auslassöffnung des ersten Sammlers und der Einlassöffnung des zweiten Verteilers angeschlossen werden können, mittels denen mehrere Sonnenkollektoren in Reihe geschaltet werden können. In Fig. 21 ist das beispielhaft für zwei Sonnenkollektoren gezeigt. Bei Bedarf können aber auch mehr als zwei Sonnenkollektoren in Reihe geschaltet werden. Diese Sonnenkollektoren können bis auf die Brücke 28' bzw. die Verbindungsrohre 30 baugleich sein.

## Patentansprüche

1. Sonnenkollektor (1) mit einem Kollektoreinlass (2) und einem Kollektorauslass (3) für ein Wärmeträgerfluid sowie mit mindestens einem mit dem Wärmeträgerfluid durchströmbaren Rohrregister (4), das einen Verteiler (5, 5A, 5B), einen Sammler (6, 6A, 6B) und mindestens drei zwischen dem Verteiler (5, 5A, 5B) und dem Sammler (6, 6A, 6B) angeordnete Strömungspfade (7.1 ... 7.7) für das Wärmeträgerfluid aufweist, wobei die Strömungspfade (7.1 ... 7.7) jeweils eine Rücklaufleitung (8.1 ... 8.7), eine Vorlaufleitung (9.1 ... 9.7) und mindestens eine zwischen der Rücklauf- und der Vorlaufleitung (8.1 ... 8.7, 9.1 ... 9.7) angeordnete Absorberleitung (10.1 ... 10.7) zur Übertragung von thermischer Solarenergie auf das Wärmeträgerfluid umfassen, wobei die Absorberleitungen (10.1 ... 10.7) in der Aufsicht auf die zur Sonnenbestrahlung vorgesehene Vorderseite des Sonnenkollektors (1) quer zu ihrer Längserstreckung zueinander versetzt nebeneinander angeordnet sind, wobei der Verteiler (5, 5A, 5B) eine mit dem Kollektoreinlass (2) verbundene oder durch diesen gebildete Einlassöffnung (12) und mehrere damit hydraulisch verbundene Austrittsöffnungen (13.1 ... 13.7) aufweist, wobei jede Austrittsöffnung (13.1 ... 13.7) mit einer Rücklaufleitung (8.1 ... 8.7) eines Strömungspfads (7.1 ... 7.7) verbunden ist, wobei der Sammler (6, 6A, 6B) mehrere Eintrittsöffnungen (15.1 ... 15.7) und eine damit hydraulisch verbundene Auslassöffnung (17) hat, wobei jede Eintrittsöffnung (15.1 ... 15.7) mit einer Vorlaufleitung (9.1 ... 9.3) eines Strömungspfads (7.1 ... 7.7) verbunden ist, wobei die Auslassöffnung (17) mit dem Kollektorauslass (3) verbunden oder durch diesen gebildet ist, wobei die Rücklaufleitungen (8.1 ...

8.7) und/oder die Vorlaufleitungen (9.1 ... 9.3) derart quer zu ihren Längsachsen zueinander versetzt nebeneinander verlaufen, dass sie ein Rohrleitungsbündel (11) bilden, das sich mit seiner Längsachse in eine Richtung erstreckt, in der die Absorberleitungen (10.1 ... 10.7) zueinander versetzt sind, wobei die Austrittsöffnungen (13.1 ... 13.7) des Verteilers (5, 5A, 5B) in Erstreckungsrichtung des Rohrleitungsbündels (11) an einer einzigen ersten Stelle und die Eintrittsöffnungen (15.1 ... 15.7) des Sammlers (6, 6A, 6B) in Erstreckungsrichtung des Rohrleitungsbündels (11) an einer einzigen zweiten Stelle angeordnet sind, **dadurch gekennzeichnet, dass** die Rücklaufleitungen (8.1 ... 8.7) und die Vorlaufleitungen (9.1 ... 9.7) der einzelnen Strömungspfade (7.1 ... 7.7) jeweils unterschiedlich lang sind, dass mindestens drei in Längsrichtung des Rohrleitungsbündels (11) verlaufende Rohrleitungsabschnitte (8.2A ... 8.7A, 8.2B ... 8.7B, 9.1A ... 9.6A, 9.1B ... 9.6B) der Rücklaufleitungen (8.1 ... 8.7) und/oder der Vorlaufleitungen (9.1 ... 9.7) des Rohrleitungsbündels (11) die Zylindermantelfläche (21) eines gedachten, zur Längsmittelachse des Rohrleitungsbündels (11) konzentrischen Zylinders schneiden, dass diese Rohrleitungsabschnitte (8.2A ... 8.7A, 8.2B ... 8.7B, 9.1A ... 9.6A, 9.1B ... 9.6B) in Umfangsrichtung der Zylindermantelfläche (21) zueinander versetzt nebeneinander angeordnet und derart radial von der Zylinderachse der Zylindermantelfläche (21) beabstandet sind, dass zwischen den in Umfangsrichtung der Zylindermantelfläche (21) zueinander versetzten Rohrleitungsabschnitten (8.2A ... 8.7A, 8.2B ... 8.7B, 9.1A ... 9.6A, 9.1B ... 9.6B) ein sich entlang der Zylinderachse erstreckender Zwischenraum (22) gebildet ist, dessen Querschnittsabmessungen zur Aufnahme eines Rohrleitungsabschnitts (8.2B ... 8.7B, 9.1A ... 9.6A) geeignet ist, dessen Querschnittsabmessungen den Querschnittsabmessungen eines der in Umfangsrichtung der Zylindermantelfläche (21) zueinander versetzten Rohrleitungsabschnitte (8.2A ... 8.7A, 8.2B ... 8.7B, 9.1A ... 9.6A, 9.1B ... 9.6B) entspricht,

- dass mindestens eine Rücklaufleitung (8.2 ... 8.7) zumindest einen ersten und einen zweiten, jeweils in Längsrichtung des Rohrleitungsbündels verlaufenden Rohrleitungsabschnitt (8.2B ... 8.7B, 8.2A ... 8.7A) aufweist, dass die Rohrleitungsabschnitte (8.2B ... 8.7B, 8.2A ... 8.7A) der Rücklaufleitung (8.2 ... 8.7) hydraulisch in Reihe geschaltet sind, dass der erste Rohrleitungsabschnitt (8.2B ... 8.7B) der Rücklaufleitung (8.2 bis 8.7) auf der Längsmittelachse des Rohrleitungsbündels (11) angeordnet und der zweite Rohrleitungsabschnitt (8.2A ... 8.7A) der Rücklaufleitung (8.2 ... 8.7) von der Längsmittelachse des Rohrleitungsbündels (11) derart radial beabstandet ist, dass er außerhalb des ersten Rohrleitungsabschnitts (8.2B ... 8.7B) der Rücklaufleitung (8.2 ... 8.7) und außerhalb der geraden Verlängerung des ersten Rohrleitungsabschnitts (8.2B ... 8.7B) der Rücklaufleitung (8.2 ... 8.7) liegt, und/oder
- dass mindestens eine Vorlaufleitung (9.1 ... 9.6) zumindest einen ersten und einen zweiten, jeweils in Längsrichtung des Rohrleitungsbündels verlaufenden Rohrleitungsabschnitt (9.1A ... 9.6A, 9.1B ... 9.6B) aufweist, dass die Rohrleitungsabschnitte (9.1A ... 9.6A, 9.1B ... 9.6B) der Vorlaufleitung (9.1 ... 9.6) hydraulisch in Reihe geschaltet sind, dass der erste Rohrleitungsabschnitt (9.1A ... 9.6A) der Vorlaufleitung (9.1 ... 9.6) auf der Längsmittelachse des Rohrleitungsbündels (11) angeordnet und der zweite Rohrleitungsabschnitt (9.1B ... 9.6B) der Vorlaufleitung (9.1 ... 9.6) von der Längsmittelachse des Rohrleitungsbündels (11) derart radial beabstandet ist, dass er außerhalb des ersten Rohrleitungsabschnitts der Vorlaufleitung (9.1A ... 9.6A) und außerhalb der geraden Verlängerung des ersten Rohrleitungsabschnitts (9.1A ... 9.6A) der Vorlaufleitung (9.1 ... 9.6) liegt.

2. Sonnenkollektor (1) nach Anspruch 1, **dadurch gekennzeichnet, dass** die Rücklaufleitungen ein erstes Rohrleitungsbündel und die Vorlaufleitungen ein zweites Rohrleitungsbündel bilden, und dass sich das erste und zweite Rohrleitungsbündel mit ihren Längsachsen in eine Richtung erstrecken und die Rohrleitungsbündel quer zu ihrer Erstreckungsrichtung parallel zueinander versetzt sind.

3. Sonnenkollektor (1) nach Anspruch 1 oder 2, **dadurch gekennzeichnet, dass** der Längenunterschied zwischen dem längsten und dem kürzesten (7.1 ... 7.7) Strömungspfad kleiner als 10% der Länge des längsten Strömungspfads (7.1 ... 7.7) ist, insbesondere kleiner als 5% und bevorzugt kleiner als 3%.

4. Sonnenkollektor (1) nach einem der Ansprüche 1 bis 3, **dadurch gekennzeichnet, dass** die Rücklaufleitungen (8.1 ... 8.7) und die Vorlaufleitungen (9.1 ... 9.7) der Strömungspfade (7.1 ... 7.7) jeweils an ihrem der Absorberleitung (10.1 ... 10.7) des betreffenden Strömungspfads (7.1 ... 7.7) zugewandten Endbereich derart von einer geraden Linie abweichen, dass das Wärmeträgerfluid beim Durchströmen des Strömungspfads (7.1 ... 7.7) eine Änderung seiner Strömungsrichtung um 90° erfährt.

5. Sonnenkollektor (1) nach einem der Ansprüche 1 bis 4, **dadurch gekennzeichnet, dass** die Absorberleitungen (10.1 ... 10.7) jeweils mindestens einen U-förmig ausgestalteten Absorberleitungsabschnitt aufweisen und/oder als Mäander ausgestaltet sind.

6. Sonnenkollektor (1) nach Anspruch 5, **dadurch gekennzeichnet, dass** die Mäander jeweils mindestens einen U-förmig ausgestalteten Mäanderabschnitt aufweisen, der mit seinen Schenkeln vorzugsweise orthogonal zur Längsachse des Rohrleitungsbündels (11) angeordnet ist.

7. Sonnenkollektor (1) nach einem der Ansprüche 1 bis 6, **dadurch gekennzeichnet,**

   - **dass** zwischen dem ersten und dem zweiten Rohrleitungsabschnitt (8.2B ... 8.7B, 8.2A ... 8.7A) der Rücklaufleitung (8.2 ... 8.7) ein Rohrleitungsbereich (23.2 ... 23.7) angeordnet ist, der Krümmungsstellen aufweist, die in Strömungsrichtung des Wärmeträgerfluids hintereinander angeordnet und in zueinander entgegengesetzte Richtungen gekrümmt sind, und/oder
   - **dass** zwischen dem ersten und dem zweiten Rohrleitungsabschnitt (9.1A ... 9.6A, 9.1B ... 9.6B) der Vorlaufleitung (9.1 ... 9.6) ein Rohrleitungsbereich (24.1 bis 24.6) angeordnet ist, der Krümmungsstellen aufweist, die in Strömungsrichtung des Wärmeträgerfluids hintereinander angeordnet und in zueinander entgegengesetzte Richtungen gekrümmt sind.

8. Sonnenkollektor (1) nach einem der Ansprüche 1 bis 7, **dadurch gekennzeichnet, dass** der Verteiler (5, 5A, 5B) an dem einen Axialende des Rohrleitungsbündels (11) und der Sammler (6, 6A, 6B) an dem anderen Axialende des Rohrleitungsbündels (11) angeordnet ist.

9. Sonnenkollektor (1) nach einem der Ansprüche 1 bis 8, **dadurch gekennzeichnet, dass** der Sonnenkollektor (1) mindestens zwei der Rohrregister (7) gemäß einem der Patentansprüche 1 bis 8 aufweist, dass ein erstes Rohrregister einen ersten Verteiler (5A) sowie einen ersten Sammler (6A) und ein zweites Rohrregister einen zweiten Verteiler (5B) sowie einen zweiten Sammler (6B) hat, dass die Rohrleitungsbündel des ersten und zweiten Rohregisters parallel nebeneinander verlaufen, dass der erste Verteiler (5A) und der zweite Sammler (6B) an einem ersten Axialende der aus den Rohrleitungsbündeln gebildeten Rohrleitungsbündel-Anordnung vorgesehen und der erste Sammler (6A) sowie der zweite Verteiler (5B) an dem vom ersten Axialende entfernten zweiten Axialende der Rohrleitungsbündel-Anordnung vorgesehen sind, und dass die Auslassöffnung (17) des ersten Sammlers (6A) mit der Einlassöffnung (12) des zweiten Verteilers (5A) über eine Brücke (28') hydraulisch verbunden ist.

10. Sonnenkollektor (1) nach einem der Ansprüche 1 bis 9, **dadurch gekennzeichnet,**

    - **dass** der Verteiler (5) einen ersten Flansch oder ein erstes Formstück aufweist, an dem die jeweils mit einer Rücklaufleitung (8.1 ... 8.7) verbundenen Austrittsöffnungen (13.1 ... 13.7) in einem vorzugsweise konstanten Winkelversatz um ein Zentrum herum angeordnet sind, und/oder
    - **dass** der Sammler (6) einen zweiten Flansch oder ein zweites Formstück aufweist, an dem die jeweils mit einer Vorlaufleitung (9.1 ... 9.7) verbundenen Eintrittsöffnungen (15.1 ... 15.7) ) in einem vorzugsweise konstanten Winkelversatz um ein Zentrum herum angeordnet sind.

**Claims**

1. Solar collector (1) having a collector inlet (2) and a collector outlet (3) for a heat transfer fluid and having at least one tube bank (4) through which the heat transfer fluid is able to flow and which has a distributing manifold (5, 5A, 5B), a collecting manifold (6, 6A, 6B) and, arranged between the distributing manifold (5, 5A, 5B) and the collecting manifold (6, 6A, 6B), at least three flow paths (7.1 ... 7.7) for the heat transfer fluid, wherein the flow paths (7.1 ... 7.7) each comprise a return line (8.1 ... 8. 7), a feed line (9.1 ... 9.7) and, arranged between the return line and the feed line (8.1 ... 8.7, 9.1 ... 9.7), at least one absorber line (10.1 ... 10.7) for transfer of thermal solar energy to the heat transfer fluid, wherein the absorber lines (10.1 ... 10.7), as seen in the plan view of the front face of the solar collector (1) that is to be irradiated by the sun, are arranged next to one another and offset from one another transversely to their longitudinal extension, wherein the distributing manifold (5, 5A, 5B) has an inlet opening (12), connected to or formed by the collector inlet (2), and multiple exit openings (13.1 ... 13.7) hydraulically connected thereto, wherein each exit opening (13.1 ... 13.7) is connected to a return line (8.1 ... 8.7) of a flow path (7.1 ... 7.7), wherein the collecting manifold (6, 6A, 6B) has multiple entry openings (15.1 ... 15.7) and an outlet opening (17) hydraulically connected thereto, wherein each entry opening (15.1 ... 15.7) is connected to a feed line (9.1 ... 9.3) of a flow path (7.1 ... 7.7), wherein the outlet opening (17) is connected to or formed by the collector outlet (3), wherein the return lines (8.1 ... 8.7) and/or the feed lines (9.1 ... 9.3) run next to one another and offset from one another transversely to their longitudinal axes such that they form a line bundle (11), the longitudinal axis of which extends in a direction in which the absorber lines (10.1 ... 10.7) are offset from one another, wherein the exit openings (13.1 ... 13.7) of the distributing manifold (5, 5A, 5B) are arranged at a single first point in the extension direction of the line bundle (11) and the entry openings (15.1 ... 15.7) of the collecting manifold (6, 6A, 6B) are arranged at a single second point in the extension direction of the line bundle (11), **characterized in that** the return lines (8.1 ... 8.7) and the feed lines (9.1 ... 9.7) of the individual flow paths (7.1 ... 7.7) are each of a different length, **in that** at least three line sections (8.2A ... 8.7A, 8.2B ... 8.7B, 9.1A ... 9.6A, 9.1B ... 9.6B) of the return lines (8.1 ... 8.7) and/or the feed lines (9.1 ... 9.7) of the line bundle (11) that run in the longitudinal direction of the line bundle (11) intersect the cylindrical lateral surface (21) of an imaginary cylinder concentric to the central longitudinal axis of the line bundle (11), **in that** said line sections (8.2A ... 8.7A, 8.2B ... 8.7B, 9.1A ... 9.6A, 9.1B ... 9.6B) are arranged next to one another and offset from one another in the circumferential direction of the cylindrical lateral surface (21) and are spaced radially from the cylinder axis of the cylindrical lateral surface (21) so as to form between the line sections (8.2A ... 8.7A, 8.2B ... 8.7B, 9.1A ... 9.6A, 9.1B ... 9.6B) offset from one another in the circumferential direction of the cylindrical lateral surface (21) an interspace (22) which extends along the cylinder axis and the cross-sectional dimensions of which are capable of accommodating a line section (8.2B ... 8.7B, 9.1A ... 9. 6A), the cross-sectional dimensions of which correspond to the cross-sectional dimensions of one of the line sections (8.2A ... 8.7A, 8.2B ... 8.7B, 9.1A ... 9.6A, 9.1B ... 9.6B) offset from one another in the circumferential direction of the cylindrical lateral surface (21),

- **in that** at least one return line (8.2 ... 8.7) has at least a first and a second line section (8.2B ... 8.7B, 8.2A ... 8.7A) which each run in the longitudinal direction of the line bundle, **in that** the line sections (8.2B ... 8.7B, 8.2A ... 8.7A) of the return line (8.2 ... 8.7) are hydraulically connected in series, **in that** the first line section (8.2B ... 8.7B) of the return line (8.2 to 8.7) is arranged on the central longitudinal axis of the line bundle (11) and the second line section (8.2A ... 8.7A) of the return line (8.2 ... 8. 7) is spaced radially from the central longitudinal axis of the line bundle (11) such that it is beyond the first line section (8.2B ... 8.7B) of the return line (8.2 ... 8.7) and beyond the straight prolongation of the first line section (8.2B ... 8.7B) of the return line (8.2 ... 8.7), and/or
- **in that** at least one feed line (9.1 ... 9.6) has at least a first and a second line section (9.1A ... 9.6A, 9.1B ... 9.6B) which each run in the longitudinal direction of the line bundle, **in that** the line sections (9.1A ... 9.6A, 9.1B ... 9.6B) of the feed line (9.1 ... 9.6) are hydraulically connected in series, **in that** the first line section (9.1A ... 9.6A) of the feed line (9.1 ... 9.6) is arranged on the central longitudinal axis of the line bundle (11) and the second line section (9.1B ... 9.6B) of the feed line (9.1 ... 9.6) is spaced radially from the central longitudinal axis of the line bundle (11) such that it is beyond the first line section of the feed line (9.1A ... 9.6A) and beyond the straight prolongation of the first line section (9.1A ... 9.6A) of the feed line (9.1 ... 9.6).

2. Solar collector (1) according to Claim 1, **characterized in that** the return lines form a first line bundle and the feed lines form a second line bundle, and **in that** the longitudinal axes of the first and the second line bundle extend in one direction and the line bundles are parallelly offset from one another transversely to their extension direction.

3. Solar collector (1) according to Claim 1 or 2, **characterized in that** the difference in length between the longest and the shortest (7.1 ... 7.7) flow path is less than 10% of the length of the longest flow path (7.1 ... 7.7), in particular less than 5% and preferably less than 3%.

4. Solar collector (1) according to any of Claims 1 to 3, **characterized in that** the return lines (8.1 ... 8.7) and the feed lines (9.1 ... 9.7) of the flow paths (7.1 ... 7.7) each deviate, at their end region nearest the relevant absorber line (10.1 ... 10.7) of the flow path (7.1 ... 7.7), from a straight line such that the heat transfer fluid changes 90° in its flow direction when flowing through the flow path (7.1 ... 7.7).

5. Solar collector (1) according to any of Claims 1 to 4, **characterized in that** the absorber lines (10.1 ... 10.7) each have at least one U-shaped absorber line section and/or are in the form of meanders.

6. Solar collector (1) according to Claim 5, **characterized in that** the meanders each have at least one U-shaped meander section, the legs of which are preferably arranged orthogonally to the longitudinal axis of the line bundle (11).

7. Solar collector (1) according to any of Claims 1 to 6, **characterized**

- **in that** between the first and the second line section (8.2B ... 8.7B, 8.2A ... 8.7A) of the return line (8.2 ... 8.7) is arranged a line region (23.2 ... 23.7) having curvature points which are arranged one after another in the flow direction of the heat transfer fluid and are curved in mutually opposite directions,

and/or

- **in that** between the first and the second line section (9.1A ... 9.6A, 9.1B ... 9.6B) of the feed line (9.1 ... 9.6) is arranged a line region (24.1 to 24.6) having curvature points which are arranged one after another in the flow direction of the heat transfer fluid and are curved in mutually opposite directions.

8. Solar collector (1) according to any of Claims 1 to 7, **characterized in that** the distributing manifold (5, 5A, 5B) is arranged at one axial end of the line bundle (11) and the collecting manifold (6, 6A, 6B) is arranged at the other axial end of the line bundle (11).

9. Solar collector (1) according to any of Claims 1 to 8, **characterized in that** the solar collector (1) has at least two of the tube banks (7) according to any of Claims 1 to 8, **in that** a first tube bank has a first distributing manifold (5A) and a first collecting manifold (6A) and a second tube bank has a second distributing manifold (5B) and a second collecting manifold (6B), **in that** the line bundles of the first and the second tube bank run parallel next to one another, **in that** the first distributing manifold (5A) and the second collecting manifold (6B) are provided at a first axial end of the line bundle arrangement formed from the line bundles and the first collecting manifold (6A) and the second distributing manifold (5B) are provided at the second axial end of the line bundle arrangement that is remote from the first axial end, and **in that** the outlet opening (17) of the first collecting manifold (6A) is hydraulically connected to the inlet opening (12) of the second distributing manifold (5A) via a bridge (28').

10. Solar collector (1) according to any of Claims 1 to 9, **characterized**

- **in that** the distributing manifold (5) has a first flange or a first shaped piece, on which the exit openings (13.1 ... 13.7) respectively connected to a return line (8.1 ... 8.7) are arranged about a centre at a preferably constant angular offset, and/or
- **in that** the collecting manifold (6) has a second flange or a second shaped piece, on which the entry openings (15.1 ... 15.7) respectively connected to a feed line (9.1 ... 9.7) are arranged about a centre at a preferably constant angular offset.

**Revendications**

1. Capteur solaire (1) comprenant une entrée de capteur (2) et une sortie de capteur (3) destinées à un fluide caloporteur et au moins un registre de tubes (4) à travers lequel le fluide caloporteur peut s'écouler et qui comporte un distributeur (5, 5A, 5B), un collecteur (6, 6A, 6B) et au moins trois chemins d'écoulement (7.1...7.7) disposés entre le distributeur (5, 5A, 5B) et le collecteur (6, 6A, 6B) et destinés au fluide caloporteur, les chemins d'écoulement (7.1...7.7) comprenant chacun une conduite de retour (8.1...8.7), une conduite montante (9.1...9.7) et au moins une conduite d'absorption (10.1...10.7) disposée entre la conduite de retour et la conduite montante (8.1...8.7, 9.1...9.7) et destinée à transférer l'énergie solaire thermique au fluide caloporteur, les conduites d'absorption (10.1...10.7) étant disposées les unes à côté des autres en étant décalées les unes par rapport aux autres transversalement à leur extension longitudinale dans une vue de dessus du côté avant du capteur solaire (1) qui est prévu pour le rayonnement solaire, le distributeur (5, 5A, 5B) comportant une ouverture d'entrée (12) reliée à l'entrée de collecteur (2) ou formée par celle-ci et plusieurs ouvertures de sortie (13.1...13.7) reliées hydrauliquement à ladite ouverture d'entrée, chaque ouverture de sortie (13.1...13.7) étant reliée à une conduite de retour (8.1...8.7) d'un chemin d'écoulement (7.1...7.7), le collecteur (6, 6A, 6B) comportant plusieurs ouvertures d'entrée (15.1 ... 15.7) et une ouverture de sortie (17) qui est reliée hydrauliquement auxdites ouvertures d'entées, chaque ouverture d'entrée (15.1...15.7) étant reliée à une conduite montante (9.1...9.3) d'un chemin d'écoulement (7.1...7.7), l'ouverture de sortie (17) étant reliée à la sortie de collecteur (3) ou formée par celle-ci, les conduites de retour (8.1...8.7) et/ou les conduites montantes (9.1...9.3) s'étendant les unes à côté des autres en étant décalées les unes par rapport aux autres transversalement à leurs axes longitudinaux de manière à former un faisceau de conduites tubulaires (11) qui s'étend avec son axe longitudinal dans une direction dans laquelle les conduites d'absorption (10.1...10.7) sont décalées les unes par rapport aux autres, les ouvertures de sortie (13.1 ... 13.7) du distributeur (5, 5A, 5B) étant disposées en un seul premier emplacement dans la direction d'extension du faisceau de conduites tubulaires (11) et les ouvertures d'entrée (15.1...15.7) du collecteur (6, 6A, 6B) étant disposées en un seul deuxième emplacement dans la direction d'extension du faisceau de conduites tubulaires (11), **caractérisé en ce que** les conduites de retour (8.1...8.7) et les conduites montantes (9.1...9.7) des différents chemins d'écoulement (7.1...7.7) sont chacune de longueurs différentes, **en ce qu'**au moins trois portions de conduite tubulaire (8.2A...8.7A, 8.2B...8.7B, 9.1A...9.6A, 9.1B...9.6B), qui s'étendent dans la direction longitudinale du faisceau de conduites tubulaires (11) ; des conduites de retour (8.1...8.7) et/ou des conduites montantes (9.1...9.7) du faisceau de conduites tubulaires (11) coupent la surface de cylindre latérale (21) d'un cylindre imaginaire concentrique à l'axe central longitudinal du faisceau de conduites tubulaires (11), **en ce que** ces portions de conduite tubulaire (8.2A...8.7A, 8.2B...8.7B, 9.1A...9.6A, 9.1B...9.6B) sont disposées les unes à côté des autres en étant décalées les unes par rapport aux autres dans la direction circonférentielle de la surface de cylindre latérale (21) et sont espacées radialement de l'axe de cylindre de la surface de cylindre latérale (21) de manière à ce qu'un espace intermédiaire (22) qui s'étend le long de l'axe de cylindre, dont les dimensions en coupe transversale sont appropriées pour recevoir une portion de conduite tubulaire (8.2B...8.7B, 9.1A...9.6A), dont les dimensions en coupe transversale correspondent aux dimensions en coupe transversale d'une des portions de conduite tubulaire (8.2A...8.7A, 8.2B...8.7B, 9.1A...9.6A, 9.1B...9.6B) qui sont décalées les unes par rapport aux autres dans la direction circonférentielle de la surface de cylindre latérale (21), est formé entre les portions de conduite tubulaire (8.2A...8.7A, 8.2B...8.7B, 9.1A...9.6A, 9.1B...9.6B) qui sont décalées les unes par rapport aux autres dans la direction circonférentielle de la surface de cylindre latérale (21)

- **en ce qu'**au moins une conduite de retour (8.2...8.7) comporte au moins une première et une deuxième portion de conduite tubulaire (8.2B...8.7B, 8.2A...8.7A) qui s'étendent chacune dans la direction longitudinale du faisceau de conduites tubulaires, **en ce que** les portions de conduite tubulaire (8.2B...8.7B, 8.2A...8.7A) de la conduite de retour (8.2...8.7) sont montées hydrauliquement en série, **en ce que** la première portion de conduite tubulaire (8.2B...8.7B) de la conduite de retour (8.2 à 8.7) est disposée sur l'axe central longitudinal du faisceau de conduites tubulaires (11) et la deuxième portion de conduite tubulaire (8.2A...8.7A) de la conduite de retour (8.2...8.7) est espacée radialement de l'axe central longitudinal du faisceau de conduites tubulaires (11) de manière à être située à l'extérieur de la première portion de conduite tubulaire (8.2B...8.7B) de la conduite de retour (8.2...8.7) et à l'extérieur du prolongement rectiligne de la première portion de conduite tubulaire (8.2B...8.7B) de la conduite de retour (8.2...8.7),
et/ou
- **en ce qu'**au moins une conduite montante (9.1...9.6) comporte au moins une première et une deuxième portion de conduite tubulaire (9.1A...9.6A, 9.1B...9.6B) qui s'étendent chacune dans la direction longitudinale du faisceau de conduites tubulaires, **en ce que** les portions de conduite tubulaire (9.1A...9.6A, 9.1B...9.6B) de la conduite montante (9.1...9.6) sont montées hydrauliquement, **en ce que** la première portion de conduite tubulaire (9.1A...9.6A) de la conduite montante (9.1...9.6) est disposée sur l'axe central longitudinal du faisceau de conduites tubulaires (11) et la deuxième portion de conduite tubulaire (9.1B...9.6B) de la conduite montante (9.1...9.6) est espacée radialement de l'axe central longitudinal du faisceau de conduites tubulaires (11) de manière à être située à l'extérieur de la première portion de conduite tubulaire (9.1A...9.6A) de la conduite montante et à l'extérieur du prolongement rectiligne de la première portion de conduite tubulaire (9.1A...9.6A) de la conduite montante (9.1...9.6) .

2. Capteur solaire (1) selon la revendication 1, **caractérisé en ce que** les conduites de retour forment un premier faisceau de conduites tubulaires et les conduites montantes forment un deuxième faisceau de conduites tubulaires, et **en ce que** les premier et deuxième faisceaux de conduites tubulaires s'étendent avec leurs axes longitudinaux dans une direction et les faisceaux de conduites tubulaires sont décalés parallèlement les uns par rapport aux autres transversalement à leur direction d'extension.

3. Capteur solaire (1) selon la revendication 1 ou 2, **caractérisé en ce que** la différence de longueur entre les chemin d'écoulement le plus long et chemin d'écoulement le plus court (7.1...7.7) est inférieure à 10 % de la longueur du chemin d'écoulement le plus long (7.1...7.7), en particulier inférieure à 5 % et de préférence inférieure à 3 %.

4. Capteur solaire (1) selon l'une des revendications 1 à 3, **caractérisé en ce que**, au niveau de leur zone d'extrémité dirigée vers la conduite d'absorption (10.1...10.7) du chemin d'écoulement concerné (7.1...7.7), les conduites de retour (8.1...8.7) et les conduites montantes (9.1...9.7) des chemins d'écoulement (7.1...7.7) diffèrent d'une ligne droite de manière à ce que le fluide caloporteur subisse un changement de direction d'écoulement de 90° lorsqu'il s'écoule dans le chemin d'écoulement (7.1...7.7).

5. Capteur solaire (1) selon l'une des revendications 1 à 4, **caractérisé en ce que** les conduites d'absorption (10.1...10.7) comportent chacune au moins une portion de conduite d'absorption en forme de U et/ou sont réalisées sous forme méandrique.

6. Capteur solaire (1) selon la revendication 5, **caractérisé en ce que** les méandres comportent chacun au moins une portion de méandre en forme de U dont les branches sont disposées de préférence orthogonalement à l'axe longitudinal du faisceau de conduites tubulaires (11) .

7.  Capteur solaire (1) selon l'une des revendications 1 à 6, **caractérisé en ce que**

    - une zone de conduite tubulaire (23.2...23.7), qui comporte des incurvations qui sont disposées les unes derrière les autres dans la direction d'écoulement du fluide caloporteur et qui sont incurvées dans des directions opposées, est disposée entre les première et deuxième portions de conduite tubulaire (8.2B...8.7B, 8.2A...8.7A) de la conduite de retour (8.2...8.7), et/ou
    - une zone de conduite (24.1 à 24.6), qui comporte des incurvations qui sont disposées les unes derrière les autres dans la direction d'écoulement du fluide caloporteur et qui sont incurvées dans des directions opposées, est disposée entre les première et deuxième portions de conduite (9.1A...9.6A, 9.1B...9.6B) de la conduite montante (9.1...9.6).

8.  Capteur solaire (1) selon l'une des revendications 1 à 7, **caractérisé en ce que** le distributeur (5, 5A, 5B) est disposé à une extrémité axiale du faisceau de conduites tubulaires (11) et le collecteur (6, 6A, 6B) est disposé à l'autre extrémité axiale du faisceau de conduites tubulaires (11).

9.  Capteur solaire (1) selon l'une des revendications 1 à 8, **caractérisé en ce que** le capteur solaire (1) comporte au moins deux des registres de tubes (7) selon l'une des revendications 1 à 8, **en ce qu'**un premier registre de tubes comporte un premier distributeur (5A) et un premier collecteur (6A) et un deuxième registre de tubes comporte un deuxième distributeur (5B) et un deuxième collecteur (6B), **en ce que** les faisceaux de conduites tubulaires des premier et deuxième registres de tubes s'étendent parallèlement les uns aux autres, **en ce que** le premier distributeur (5A) et le deuxième collecteur (6B) sont prévus à une première extrémité axiale de l'ensemble de faisceaux de conduites tubulaires formé à partir des faisceaux de conduites tubulaires et le premier collecteur (6A) et le deuxième distributeur (5B) sont prévus à la deuxième extrémité axiale, éloignée de la première extrémité axiale, de l'ensemble de faisceaux de conduites tubulaires, et **en ce que** l'ouverture de sortie (17) du premier collecteur (6A) est reliée hydrauliquement à l'ouverture d'entrée (12) du deuxième distributeur (5A) par le biais d'un pont (28').

10. Capteur solaire (1) selon l'une des revendications 1 à 9, **caractérisé en ce que**

- le distributeur (5) comporte une première bride ou un premier raccord au niveau desquels les ouvertures de sortie (13.1...13.7), reliées chacune à une conduite de retour (8.1...8.7), sont disposées autour d'un centre avec un décalage angulaire de préférence constant, et/ou
- le collecteur (6) comporte une deuxième bride ou un deuxième raccord au niveau desquels les ouvertures d'entrée (15.1...15.7) reliées chacune à une conduite montante (9.1...9.7) sont disposées autour d'un centre avec un décalage angulaire de préférence constant.

Fig. 1

Fig. 2

Fig. 3

Fig. 4

8.7A, 9.1B

8.7B, 9.1A

20.1B, 20.7A

Fig. 5

10.1, 10.7

7.1, 7.7

Fig. 6

EP 4 015 935 B1

19

8.6, 9.2

20.2B, 20.6A

20.2A, 20.6B

8.2, 9.6

10.2, 10.6

7.2, 7.6

Fig. 7

8.6B, 9.2A

8.6A, 9.2B

20.2B, 20.6A

10.2, 10.6

7.2, 7.6

Fig. 8

EP 4 015 935 B1

Fig. 9

8.6, 9.2
8.6A, 9.2B
23.6, 24.2
8.6B, 9.2A
20.2B, 20.6A
10.2, 10.6
20.2A, 20.6B
10.2, 10.6
8.2, 9.6
8.2A, 9.6B
23.2, 24.6
8.2B, 9.6A
7.2, 7.6

24

Fig. 10

20.3B, 20.5A

20.3A, 20.5B

8.5, 9.3

19

8.3, 9.5

10.3, 10.5

7.3, 7.5

8.5B, 9.3A

8.5A, 9.3B

20.3B, 20.5A

10.3, 10.5

Fig. 11

7.3, 7.5

Fig. 12

Fig. 13

9.4B

10.4

20.4B

10.4

Fig. 14

7.4

Fig. 15

EP 4 015 935 B1

Fig. 16

Fig. 17

Fig. 18

Fig. 19

Fig. 20

Fig. 21

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013008717 A1
- EP 1354170 B1